(19) Europäisches Patentamt
European Patent Office
Office européen des brevets

(11) EP 4 449 533 B1

(12) EUROPEAN PATENT SPECIFICATION

(45) Date of publication and mention of the grant of the patent:
**11.02.2026 Bulletin 2026/07**

(21) Application number: **22838657.9**

(22) Date of filing: **13.12.2022**

(51) International Patent Classification (IPC):
***H01M 10/0569*** (2010.01) ***H01M 4/131*** (2010.01)
***H01M 4/134*** (2010.01) ***H01M 4/38*** (2006.01)
***H01M 4/505*** (2010.01) ***H01M 4/525*** (2010.01)
***H01M 4/58*** (2010.01) ***H01M 10/052*** (2010.01)
***H01M 10/0568*** (2010.01) ***H01M 4/1395*** (2010.01)
***H01M 4/36*** (2006.01) ***H01M 4/02*** (2006.01)

(52) Cooperative Patent Classification (CPC):
**H01M 10/0569; H01M 4/131; H01M 4/134; H01M 4/1395; H01M 4/38; H01M 4/382; H01M 4/505; H01M 4/525; H01M 4/5815; H01M 4/5825; H01M 10/052; H01M 10/0568;**
H01M 4/366; H01M 2004/027; Y02E 60/10

(86) International application number:
**PCT/EP2022/085526**

(87) International publication number:
**WO 2023/110820 (22.06.2023 Gazette 2023/25)**

(54) **A BATTERY COMPRISING A HIGH-CONCENTRATED ELECTROLYTE AND A NEGATIVE ELECTRODE HAVING A METAL SUBSTRATE AND A PROTECTIVE LAYER**

NEGATIVELEKTRODE MIT EINEM METALLSUBSTRAT UND EINER SCHUTZSCHICHT

ÉLECTRODE NÉGATIVE COMPRENANT UN SUBSTRAT MÉTALLIQUE ET UNE COUCHE DE PROTECTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.12.2021 EP 21214153**
**13.12.2021 EP 21214155**

(43) Date of publication of application:
**23.10.2024 Bulletin 2024/43**

(73) Proprietor: **Umicore**
**1000 Brussels (BE)**

(72) Inventor: **THOMPSON, Travis**
**1000 Brussels (BE)**

(74) Representative: **Umicore RDI Patent Department**
**Watertorenstraat 33**
**2250 Olen (BE)**

(56) References cited:
**US-A1- 2019 379 040** **US-A1- 2021 087 317**

- **XU JIANHUA ET AL: "Intrinsic self-healing polymers for advanced lithium-based batteries: Advances and strategies", APPLIED PHYSICS REVIEWS, AMERICAN INSTITUTE OF PHYSICS, 2 HUNTINGTON QUADRANGLE, MELVILLE, NY 11747, vol. 7, no. 3, 18 August 2020 (2020-08-18), XP012249428, DOI: 10.1063/5.0008206**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 449 533 B1

## Description

### TECHNICAL FIELD AND BACKGROUND

This invention relates to a battery comprising a negative electrode comprising a metal substrate and a protective layer disposed directly on at least a part of the metal substrate and a high-concentrated electrolyte.

As the development of small and lightweight electronic products, electronic devices, communication devices and the like has advanced rapidly and a need for electric vehicles has widely emerged with respect to environmental issues, there is a demand for improvement of performance of secondary batteries used as power sources for these products. Among these, a lithium metal secondary battery has come into the spotlight as a high-performance battery due to a high energy density and a high reference electrode potential.

Due to the high reactivity of the lithium metal, a side reaction between the lithium and an liquid electrolyte occurs during charge and discharge of the battery thereby promoting decomposition of the electrolyte. In addition, electron density non-uniformization may occur on the lithium metal surface during battery operation due to various reasons. As a result, a branch-shaped lithium dendrite is produced on the electrode surface making the electrode surface very rough and potentially causing separator damages. These side reactions deteriorate coulombic efficiency and/or electrochemical stability of the lithium metal battery and cause a decrease in the lifespan of the lithium battery.

Therefore, there are various attempts conducted to stabilize the lithium metal and prevent or reduce the side reaction between the electrolyte and the lithium metal.

KR20030042288 A describes a lithium secondary battery capable of suppressing dendrite growth on the surface of a lithium metal negative electrode due to a cross-linked polymer protective film formed on the surface of the lithium metal, wherein the polymer is cross-linked 1,6-hexanediol diacrylate or a copolymer of 1,6-hexanediol diacrylate and oligo ethylene glycol diacrylate. The battery further comprises a gel electrolyte polymer consisting of a mixture of 1 M $LiClO_4$ in ethylene carbonate, propylene carbonate, poly(vinylidene fluoride-co-hexafluoropropylene)

US2016/0372743 A1 concerns a battery having a coating on a lithium metal anode to prevent direct contact of the lithium metal with the volatile liquid electrolyte. The coating consists of either a single layer polymer consisting of PVDF homopolymer, an ionic liquid and LiFSI or either a double layer polymer coating having a first outer layer of PVDF, an ionic liquid and LiFSI and a second inner layer of poly(styreneacrylonitrile) and LiFSI. The battery further comprises an electrolyte consisting of 2 M LiFSI in ethylene carbonate.

US 6,902,848 B1 discloses a lithium battery comprising a negative electrode, which is laminated with a gel electrolyte, and a liquid electrolyte consisting of 1.5 - 6 M $LiBF_4$ in $\gamma$-butyrolactone. The gel electrolyte consists of a crosslinked poly(ethylene glycol) based acrylate monomer.

However, a drawback of coating the anodes with a protective layer is the introduction of additional sources of resistance in the battery. The polymer coated anode display an increased resistance, in particular an increased uncompensated resistance $R_u$ and/or an increased charge transfer resistance $R_{ct}$. This increased resistance causes a voltage drop during operation of the battery, which also consumes part of the useful energy as waste heat.

Therefore, there is a need to achieve a battery with a protective layer around a negative electrode and simultaneously have an minimal increase of the resistance in the battery.

It is an object of the present invention to provide a battery comprising a negative electrode having a metal substrate with a protective layer around the metal substrate in combination with a high-concentrated electrolyte.

### SUMMARY OF THE INVENTION

An object of the present invention is achieved by providing a battery according to claim 1, comprising

a. a negative electrode comprising

- a metal substrate, and
- a protective layer disposed directly on at least a part of the metal substrate, wherein the protective layer comprises a copolymer and a first lithium salt

b. a positive electrode, and

c. an electrolyte composition comprising

   i. an organic non-fluorinated liquid comprising a second lithium salt, and
   ii. a fluorinated liquid.

The present inventors have surprisingly found that the combination of the protective layer comprising the

copolymer disposed on the metal substrate of the negative electrode with the electrolyte comprising the second lithium salt, the organic non-fluorinated liquid and the fluorinated liquid results in a reduced resistance, in particular a reduced uncompensated resistance $R_u$ and a reduced charge transfer resistance $R_{ct}$, of the battery, as demonstrated in the appended examples. In particular, the negative electrode comprising the copolymer obtainable by the reaction between poly(ethylene glycol) diacrylate (PEGDA) and N-hydroxyethyl acrylamide (HEAA) displays a reduced uncompensated resistance $R_u$ and a reduced charge transfer resistance $R_{ct}$ in the presence of the electrolyte comprising a fluorinated liquid, such as 1,1,2,2-tetrafluoroethyl-2,2,2-trifluoroethyl ether (TFTFE). Moreover, the present inventors have surprisingly found that the protecting layer according to the invention functions as a self-healing polymer film, as demonstrated in the appended examples. The protecting layer according to the invention is a mechanically robust polymer which also has self-healing properties and is the result of a careful balance between polymer chain mobility, the amount of hydrogen bonding motifs and the degree of cross-linking.

As appreciated by the skilled person metallic lithium spontaneously react with the electrolyte solvent and salt anions forming a passivation layer known as a solid electrolyte interface (SEI). SEI layers are naturally heterogenous in composition, morphology and ionic conductivity leading to dendrite formation and growth (which is attributed to safety issues and poor battery performance). This SEI layer will continue to grow due to reaction with the liquid electrolyte resulting in a thick and high resistance layer. Without wishing to be bound by any theory, the inventors believe that the protecting layer of the invention on the metal substrate physically separates the highly reactive metallic lithium from the electrolyte while keeping lithium-ion conductivity through the film, thereby limiting the formation of a solid electrolyte interface (SEI) layer. Hence, the protection layer prevents continuous growth of the layer due to prevention of contact between the electrolyte and the metal substrate resulting in a thinner SEI layer having lower resistance.

Although self-healing polymers (see for example I. Gadwal, Macromol 2021, 1, 18-36) and high-concentration lithium based electrolytes diluted with hydrofluoroethers (see for example S. Lin et al, ACS Appl. Mater. Interfaces 2020, 12, 30, 33710-33718) are known in the art, the present inventors are the first to demonstrate that the combination of the protective layer according to the invention having self-healing properties and the electrolyte according to the invention comprising a fluorinates liquid result in a battery displaying a reduced resistance.

## BRIEF DESCRIPTION OF THE FIGURES

Figure 1: SEM (scanning electron microscope) images of the each of the three polymer formulations 1-a, 1-b and 1-c (see Table 1).

Figure 2: The measured uncompensated resistance ($R_u$) for each Li-Li symmetrical coin cells over a 20-hour period after cell construction for an unprotected lithium anode and a protected anode using polymer formulations 1-a, 1-b and 1-c; electrolyte = 4.5 M LiFSI in DME

Figure 3: The measured uncompensated resistance ($R_u$) for each Li-Li symmetrical coin cells over a 20-hour period after cell construction for an unprotected lithium anode and a protected anode using polymer formulations 2-a, 2-b, 2-c and 2-d; electrolyte = 4.5 M LiFSI in DME

Figure 4: SEM micrographs of polymer films containing varying amounts of HEAA, each polymer film was cut with a scalpel, imaged and then allowed to soak in 4.5 M LiFSI in DME overnight (16 hrs) before being rinsed with pure DME and imaged again.

Figure 5: Total specific discharge capacity of Li-NMC pouchcells containing protected anodes with varying PEG:HEAA ratios (cycling regime is C/3-D/1 with a potential hold at the top and bottom of charge).

Figure 6: Coulombic efficiency of Li-NMC pouch cells containing protected anodes with varying PEG:HEAA ratios (cycling regime is C/3-D/1 with a potential hold at the top and bottom of charge).

Figure 7: (a) Polymer film conductivity in (4.5 M LiFSI in DME):TTE (3:1, v/v) without thermal annealing; (b) Polymer film conductivity in (4.5 M LiFSI in DME):TTE (3:1, v/v) with thermal annealing

Figure 8: Total specific discharge capacity of Li-NMC pouch cells containing protected anodes with varying PEG:HEAA ratios subjected to thermal annealing (cycling regime is C/3-D/1 with a potential hold at the top and bottom of charge).

Figure 9: Coulombic efficiency of Li-NMC pouch cells containing protected anodes with varying PEG:HEAA ratios subjected to thermal annealing (cycling regime is C/3-D/1 with a potential hold at the top and bottom of charge).

Figure 10: Coulombic efficiency of Li-NMC pouch cells containing protected anodes with varying concentrations of the electrolyte in the electrolyte composition.

Figure 11: Coulombic efficiency of Li-NMC pouch cells containing protected anodes with temperature.

## DETAILED DESCRIPTION

In the drawings and the following detailed description, preferred embodiments are described in detail to enable practice of the invention. Although the invention is described with reference to these specific preferred embodiments, it will be understood that the invention is not limited to these preferred embodiments. In contrast, the invention includes numerous alternatives, modifications and equivalents as will become apparent from consideration of the following detailed description and accompanying drawings.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

As used herein, the terms "optional" or "optionally" means that a subsequently described event or circumstance can or cannot occur, and that the description includes instances where said event or circumstance occurs and instances where it does not occur.

As used herein the term "alkyl" has the broadest meaning generally understood in the art, and may include a moiety which is linear or branched, or a combination thereof. In particular, the term "alkyl" - alone or in combination means a straight or branched alkane-derived radical, for example, $C_{F-G}$ alkyl defines a straight or branched alkyl radical having from F to G carbon atoms, e.g. $C_{1-4}$ alkyl defines a straight or branched alkyl radical having from 1 to 4 carbon atoms such as for example methyl, ethyl, 1-propyl, 2-propyl (isopropyl), 1 5 -butyl, 2-butyl, 2-methyl-2-propyl (*tert*-butyl), 2-methyl-1-propyl (isobutyl).

The term "alkanediyl" - alone or in combination means a straight or branched alkyl derived divalent radical.

As used herein the term "uncompensated resistance ($R_u$)" is defined as the resistance value which includes the cell resistance and any minor additional resistance. Major contributions to the cell resistance are e.g. derived from ionic conductivity of liquid electrolyte and/or ionic conductivity of the polymer protection layer. Minor resistance contributions are e.g. metallic parts such as cables/contacts etc.

As used herein the charge transfer resistance ($R_{ct}$) is a measure of the redox reaction kinetics occurring at the electrochemically active materials (e.g. the rate of movement of an electron, which is the limiting process for the charge transfer process, from one atom or compound to another atom or compound and originates from the electronic and ionic resistances at the electrode-electrolyte interface).

### Battery

As mentioned above a first aspect of the present invention is to provide a battery comprising

a. a negative electrode (i.e. an anode) for a battery comprising

- a metal substrate, and
- a protective layer disposed directly on at least a part of the metal substrate,
  wherein the protective layer comprises

  o a copolymer obtainable by the reaction between:

  - a first monomer represented by formula (I),

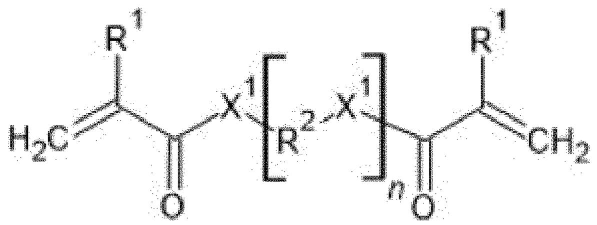

(I),

wherein $R^1 = H$ or $CH_3$; $R^2$ is a $C_{2-6}$ alkanediyl, wherein the alkanediyl is optionally substituted with one or more substituents selected from halide, $C_{1-4}$ alkyl, $CF_3$ or $OR^3$, wherein $R^3$ is selected from hydrogen or $C_{1-4}$ alkyl; $X^1 = NH$ or O; and *n* is an integer selected from 5-150, preferably 8-100, more preferably 10-50; and

- a second monomer represented by formula (II),

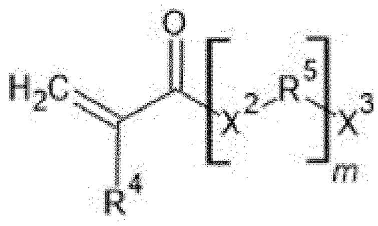

(II),

wherein $R^4 = H$ or $CH_3$; $R^5$ is a $C_{2-6}$ alkanediyl, wherein the alkanediyl is optionally substituted with one or more substituents selected from halide, $C_{1-4}$ alkyl, $CF_3$ or $OR^6$, wherein $R^6$ is selected from hydrogen or $C_{1-4}$ alkyl; $X^2 = NH$ or O; $X^3 = SH$, $NH_2$ or OH and m is an integer selected from 1-10, preferably 1-5, more preferably *m* = 1; and
wherein the weight ratio of the first monomer to the second monomer is between 1:5 and 8:1 (w/w);

o a first lithium salt.

b. a positive electrode, and
c. an electrolyte composition comprising

i. an organic non-fluorinated liquid comprising a second lithium salt, and
ii. a fluorinated liquid,
wherein the molar ratio of the second lithium salt to fluorinated liquid is between 1:2 and 1:0.15 (mol/mol).

In a preferred embodiment the invention provides a conductive layer, wherein the conductive layer consists of the protective layer according to the invention and a fluoropolymer additive. As appreciated by the skilled person the battery of the invention comprises

a. the negative electrode comprising

- the metal substrate according to the invention, and
- the conductive layer consisting of the protective layer according to the invention and a fluoropolymer additive,

b. the positive electrode according to the invention, and
c. the electrolyte composition according to the invention.

*Metal substrate*

An embodiment of the invention is the negative electrode according to the invention comprising a metal substrate. In a preferred embodiment the metal substrate comprises a conductive metal, preferably stainless steel, copper, nickel, iron, cobalt, lithium, lithium alloy or a combination thereof, more preferably stainless steel, copper, nickel, lithium, lithium alloy or a combination thereof. In a more preferred embodiment the metal substrate is a lithium metal substrate or a lithium metal alloy substrate, preferably a lithium metal substrate. As appreciated by the skilled person the metal substrate may be a metal deposited onto a supporting foil such as stainless steel, copper, nickel, iron, cobalt or a lithium or lithium alloy layer made as a foil or as a layer deposited upon a surface.

*Fluoropolymer additive*

As described above the conductive layer according to the invention consist of the protective layer according to the invention and a fluoropolymer additive, wherein the conductive layer is directly disposed on at least a part of the metal

substrate and wherein the fluoropolymer additive is selected from the group consisting of polytetrafluoroethylene (PTFE), polyvinylidene fluoride (PVDF), a tetrafluoroethylene-perfluoro alkylvinyl ether copolymer, poly(vinylidene fluoride-co-hexafluoropropylene) (PVDF-HFP), a vinylidene fluoride-chlorotrifluoroethylene copolymer, an ethylene-tetrafluoroethylene copolymer, a polychlorotrifluoroethylene, vinylidene fluoride-pentafluoropropylene copolymer. a propylenetetrafluoroethylene copolymer, an ethylenechlorotrifluoroethylene copolymer, a vinylidene fluoride-hexafluoropropylene-tetrafluoroethylene copolymer, a vinylidene fluoride-perfluoromethylvinyl ether-tetrafluoroethylene copolymer and a combination thereof, preferably the fluoropolymer additive is polyvinylidene fluoride or poly(vinylidene fluoride-co-hexafluoropropylene), most preferably poly(vinylidene fluoride-co-hexafluoropropylene).

In a preferred embodiment the fluoropolymer additive is present in an amount less than 75 wt.% based by total weight of the conductive layer, preferably less than 50 wt.%, most preferably less than 20 wt.% by the total weight of the conductive layer. In a preferred embodiment the fluoropolymer additive is present in an amount more than 0.05 wt.% by the total weight of the conductive layer, preferably more than 5 wt.%, most preferably more than 10 wt.% by total weight of the conductive layer. In a preferred embodiment the fluoropolymer additive is present in an amount between 0.05 and 75 wt.% based by total weight of the conductive layer, preferably between 5 and 50 wt.%, more preferably between 10 and 20 wt.% by total weight of the conductive layer.

In a preferred embodiment of the invention, the weight ratio of the copolymer to the fluoropolymer additive is between 1:5 and 8:1 (w/w), preferably between 1:2 and 5:1 (w/w), more preferably between 1:2 and 4:1, most preferably between 2:1 and 4:1.

In an embodiment of the invention the fluoropolymer additive has a weight average molecular weight $M_w$ of more than 1,000 g/mol, preferably more than 10,000 g/mol, more preferably more than 100,000 g/mol, most preferably more than 300,000 g/mol. In an embodiment of the invention the fluoropolymer additive has a weight average molecular weight $M_w$ of less than 1,000,000 g/mol, preferably less than 800,000 g/mol, more preferably less than 750,000 g/mol, most preferably less than 600,000 g/mol. In an embodiment of the invention the fluoropolymer additive has a weight average molecular weight $M_w$ between 1,000 and 1,000,000 g/mol, preferably between 10,000 and 800,000 g/mol, more preferably between 100,000 and 750,000 g/mol, most preferably between 300,000 and 600,000 g/mol. Preferred examples of the fluoropolymer additive, in particular poly(vinylidene fluoride-co-hexafluoropropylene), have a weight average molecular weight of around 400,000 g/mol or a weight average molecular weight $M_w$ of around 455,000 g/mol. Fluoropolymer additives, such as poly(vinylidene fluoride-co-hexafluoropropylene), can be commercially bought from suppliers, such as Sigma-Aldrich.

In an embodiment of the invention the fluoropolymer additive has a number average molecular weight $M_n$ of more than 250 g/mol, preferably more than 2,500 g/mol, more preferably more than 25,000 g/mol, most preferably more than 75,000 g/mol. In an embodiment of the invention the fluoropolymer additive has a weight average molecular weight $M_n$ of less than 250,000 g/mol, preferably less than 200,000 g/mol, more preferably less than 190,000 g/mol, most preferably less than 150,000 g/mol. In an embodiment of the invention the fluoropolymer additive has a weight average molecular weight $M_n$ between 250 and 250,000 g/mol, preferably between 2,500 and 400,000 g/mol, more preferably between 25,000 and 190,000 g/mol, most preferably between 75,000 and 150,000 g/mol. Preferred examples of the fluoropolymer additive, in particular poly(vinylidene fluoride-co-hexafluoropropylene), have a number average molecular weight $M_n$ of around 130,000 g/mol or a number average molecular weight $M_n$ of around 110,000 g/mol. Fluoropolymer additives, such as poly(vinylidene fluoride-co-hexafluoropropylene), can be commercially bought from suppliers, such as Sigma-Aldrich.

The present inventors have found that the addition of the fluoropolymer additive improves the conductivity of the conductive layer, improves the wetting of the conductive layer and allows for printing of homogenous films of the conductive layer, as demonstrated in the appended examples.

*Copolymer*

An embodiment of the invention is the copolymer obtainable by the reaction between:

- a first monomer represented by formula (I),

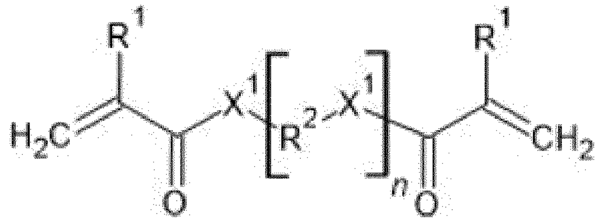

(I)

wherein $R^1$ = H or $CH_3$; $R^2$ is a $C_{2-6}$ alkanediyl, wherein the alkanediyl is optionally substituted with one or more substituents selected from halide, $C_{1-4}$ alkyl, $CF_3$ or $OR^3$, wherein $R^3$ is selected from hydrogen or $C_{1-4}$ alkyl; $X^1$ = NH or O; and *n* is an integer selected from 5-150, preferably 8-100, more preferably 10-50; and

- a second monomer represented by formula (II),

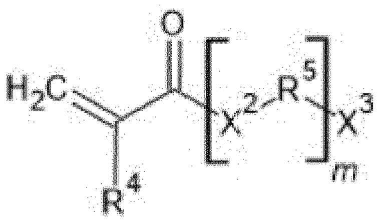

(II)

wherein $R^4$ = H or $CH_3$; $R^5$ is a $C_{2-6}$ alkanediyl, wherein the alkanediyl is optionally substituted with one or more substituents selected from halide, $C_{1-4}$ alkyl, $CF_3$ or $OR^6$, wherein $R^6$ is selected from hydrogen or $C_{1-4}$ alkyl; $X^2$ = NH or O; $X^3$ = SH, $NH_2$ or OH and *m* is an integer selected from 1-10, preferably 1-5, more preferably m = 1.

An embodiment of the invention is the first monomer represented by formula (I) wherein $R^1$ is H or $CH_3$, preferably H; $R^2$ is a $C_{2-6}$ alkanediyl, preferably a $C_{2-4}$ alkanediyl, more preferably a $C_2$ alkanediyl, wherein the alkanediyl is optionally substituted with one or more substituents selected from halide, $C_{1-4}$ alkyl, $CF_3$ or $OR^3$, wherein $R^3$ is selected from hydrogen or $C_{1-4}$ alkyl; $X^1$ = NH or O, preferably O; and *n* is an integer selected from 5-150, preferably 8-100, more preferably 10-50.

A preferred embodiment of the invention is the first monomer according the invention, wherein the first monomer is represented by formula (III)

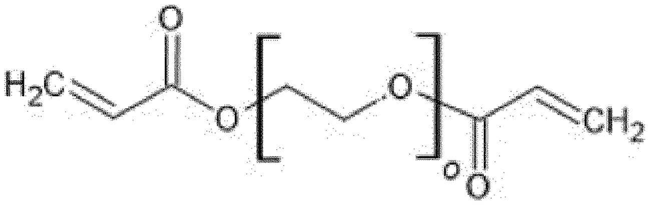

(III),

wherein o is an integer selected from 5-150, preferably 8-100, more preferably 10-50. In particular, the first monomer represented by formula (III) is poly(ethylene glycol) diacrylate (PEGDA).

A preferred embodiment of the invention is the first monomer according to the invention, wherein the first monomer has a number average molecular weight $M_n$ of more than 50 g/mol, preferably more than 100 g/mol, more preferably more than 200 g/mol, even more preferably more than 550 g/mol, most preferably more than 700 g/mol. A preferred embodiment of the invention is the first monomer according to the invention, wherein the first monomer has a

number average molecular weight $M_n$ of less than 20,000 g/mol, preferably less than 7,000 g/mol, more preferably less than 4,000 g/mol, even more preferably less than 2,000 g/mol, most preferably less than 1,000 g/mol. A preferred embodiment of the invention is the first monomer according to the invention, wherein the first monomer has a number average molecular weight $M_n$ between 50 and 20,000 g/mol, preferably between 100 and 7,000 g/mol, more preferably between 200 and 4,000 g/mol, even more preferably between 550 and 2,000 g/mol, most preferably between 700 and 1,000 g/mol. Particular examples are PEGDA having an average $M_n$ of 250 g/mol, 575 g/mol, 700 g/mol, 4,000 g/mol or 6,000 g/mol. Preferred examples of the first monomer according to the invention are PEGDA having a number average molecular weight $M_n$ of 250 g/mol, 575 g/mol or 700 g/mol; preferably 700 g/mol. PEGDA can be commercially bought from suppliers, such as Sigma-Aldrich.

As demonstrated in the examples below the first monomer according to the invention, in particular PEGDA, improves the Li-ion conductivity of the copolymer according to the invention, the protective layer according to the invention and/or the conductive layer according to the invention.

An embodiment of the invention is the second monomer represented by formula (II), wherein $R^4$ = H or $CH_3$, preferably H; $R^5$ is a $C_{2-6}$ alkanediyl, preferably a $C_{2-4}$ alkanediyl, more preferably a $C_2$ alkanediyl, wherein the alkanediyl is optionally substituted with one or more substituents selected from halide, $C_{1-4}$ alkyl, $CF_3$ or $OR^6$, wherein $R^6$ is selected from hydrogen or $C_{1-4}$ alkyl; $X^2$ = NH or O, preferably NH; $X^3$ = SH, $NH_2$ or OH, preferably OH and m is an integer selected from 1-10, preferably 1-5, most preferably *m* = 1.

A preferred embodiment of the invention is the second monomer according to the invention, wherein the second monomer is represented by formula (IV)

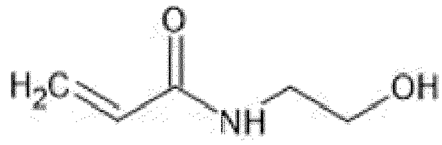

(IV),

in particular the second monomer represented by formula (IV) is N-(2-hydroxyethyl)acrylamide (HEAA). HEAA can be commercially bought from suppliers, such as Sigma-Aldrich and TCI Chemicals.

As demonstrated in the examples below introduction of the second monomer according to the invention into the copolymer, in particular *N*-(2-hydroxyethyl)acrylamide (HEAA), results in the self-healing properties of the copolymer. The first monomer according to the invention comprises a hydrogen bond acceptor, *e.g.* the carbonyl functionality of the first monomer represented by formula (I), preferably the ester functionality of the first monomer represented by formula (III). The second monomer according to the invention comprises a hydrogen bond acceptor, e.g. the carbonyl functionality of the second monomer represented by formula (II), preferably the amide functionality of the second monomer represented by formula (IV). The second monomer according to the invention comprises a hydrogen bond donor, *e.g.* the hydrogens present in substituent $X^3$ of the second monomer represented by formula (II), *e.g.* the thiol, amino or hydroxyl functional group, preferably the hydrogen of the hydroxyl group of the second monomer represented by formula (IV). The present inventors believe that the hydrogen bond donor present in the second monomer can form a hydrogen bond with the hydrogen bond acceptor present in a further second monomer of the invention and/or the hydrogen bond acceptor present in the first monomer of the invention. The present inventors believe that the hydrogen bonding properties of the copolymer result in the self-healing properties of the copolymer and/or protective layer. The hydrogen bonds present in the copolymer according to the invention have a relatively weak bond strength (1.9-6.9 $kcal.mol^{-1}$) meaning that they can be broken and reformed at ambient temperatures.

As appreciated by the skilled person the copolymer according to the invention is obtainable through a cross-linking step (*i.e.* radical polymerization) of the corresponding vinyl monomers, such as the first monomer according to the invention and the second monomer according to the invention. In embodiments of the invention the initiator that may be used for the radical polymerization varies depending on the crosslinking reaction, and known photo initiators or thermal initiators may all be used, preferably a photo initiator is used. Examples of the photo initiator may include benzoin, benzoin ethyl ether, benzoin isobutyl ether, alphamethyl benzoin ethyl ether, benzoin phenyl ether acetophenone, dimethoxyphenyl acetophenone, 2,2-diethoxyacetophenone, 1,1-dichloroacetophenone, trichloroacetophenone, benzophenone, p-chlorobenzophenone, 2,4-dihydroxybenzophenone, 2-hydroxy-4-methoxybenzophenone. 2-hydroxy-2-methylpropiophenone, benzoyl benzoate, anthraquinone, 2-ethylanthraquinone, 2-chloroanthraquinone, 2-methyl-1-(4-methylthiophenyl)-morpholinopropanone-1,2-hydroxy-2-methyl-1-phenylpropan-1-one (Darocure 1173), 2-methyl-4'-(methylthio)-2-morpholinopropiophenone (Irgacure 907), Phenyl bis (2,4,6-trimethylbenzoyl)-phosphine oxide (Irgacure 819), 2-benzyl-2-dimethylamino-1-(4-morpholinophenyl)-butanone-1,1-hydroxycyclohexylphenyl ketone (Irgacure 184), Michler's ketone, benzyl dimethyl ketal, thioxanthone, isopropyl thioxanthone, chlorothioxanthone, benzyl disulfide, butanediol, carbazole, fluorenone, alphaacyloxime ester and a combination thereof, and examples of the thermal initiator may include peroxide (-O-O-) series, benzoyl peroxide, cumyl hydroperoxide and the like, and azo-based compound (-N=N-) series azobisisobutyronitrile, azobisovaleronitrile and the like may be used. In a preferred embodiment of the invention the photoinitiator is phenyl bis-(2,4,6-trimethylbenzoyl)-phosphine oxide (Irgacure 819) or 2-methyl-4'-(methylthio)-2-morpholinopropiophenone (Irgacure 907), preferably Irgacure 819.

The content of the initiator is not particularly limited in the present invention, and is preferably in a range that does not affect properties of the copolymer according to the invention, an electrode and a liquid electrolyte present in a battery. In an embodiment of the invention the initiator is used a range of 1 - 15 wt.% by total weight of the conductive layer, preferably in a range of 1 -5 wt.%, more preferably in a range of 2-4 wt.% by total weight of the conductive layer.

In embodiments of the invention the crosslinking step affording the copolymer according to the invention is carried in an organic liquid capable of the dissolving the first monomer according to the invention, the second monomer according to the invention and/or the copolymer according to the invention. Preferably the organic liquid is a non-aqueous organic liquid. In this case, known liquids such as a carbonate-based, ester-based, ether-based, ketone-based, alcohol-based or an aprotic liquid may be used as the non-aqueous organic liquid. For example, the aprotic organic liquid is selected from the group consisting of N-methyl-2-pyrrolidmone, propylene carbonate, ethylene carbonate, butylene carbonate, dimethyl carbonate, diethyl carbonate, ethyl methyl carbonate, 1-butyrolactone, 1,2-dimethoxy ethane, 1,2-diethoxy ethane, tetrahydrofuran, 2-methyl tetrahydrofuran, dimethylsulfoxide, 1,3-dioxolane, 4-methyl-1,3-dioxene, diethylether, formamide, dimethylformamide, dioxolane, acetonitrile, nitromethane, methyl formate, methyl acetate, triester phosphate, trimethoxymethane, a dioxolane derivative, sulfolane, methyl sulfolane, 1,3-dimethyl-2-imidazolidinone, a propylene carbonate derivative, a tetrahydrofuran derivative, ether, methyl propionate, ethyl propionate, and a combination thereof. Preferred examples of the organic liquids are acetonitrile or tetrahydrofuran.

In embodiments of the invention the crosslinking step comprises applying heat or irradiating active energy rays, wherein the crosslinking by heat may use a method for heating, and the active energy rays may be through irradiating far-infrared rays, ultraviolet rays or an electron beam.

In embodiments of the invention the crosslinking step occurs through thermal crosslinking or photo crosslinking, preferably photo crosslinking. In embodiments of the invention, the thermal crosslinking may be carried out at a temperature of 50 °C to 200 °C, preferably at a temperature of 80 °C to 110 °C and the heating time for the crosslinking is from 30 minutes to 48 hours, more preferably from 8 hours to 24 hours. When the heating temperature and time are less than the above-mentioned ranges, crosslinking is difficult to be sufficiently formed and when the heating temperature and time are greater than the above-mentioned ranges, side reactions may occur, or material stability may decrease. In preferred embodiments of the invention, the photo crosslinking including active energy ray irradiation is carried out for 10 seconds to 5 hours, preferably for 1 minute to 1 hour, most preferably for 2 minutes to 10 minutes. In preferred embodiments of the invention, the photo crosslinking occurs at temperature between 5 to 60 °C, preferably between 10 to 50 °C, most preferably between 20 and 40 °C. When the time of active ray irradiation is less than the above-mentioned range, crosslinking is difficult to be sufficiently formed, and when time is greater than the above-mentioned range, side reaction may occur, or material stability may decrease.

As appreciated by the skilled person the copolymer is obtainable by reaction of at least two monomers being the first monomer represented by formula (I) and the second monomer represented by formula (II), but is not limited to be obtainable by reaction between only two different monomers, but may also be obtainable by the reaction between e.g. three monomers, in particular the first monomer according to the invention, the second monomer according to the invention and a third monomer represented by formula (V) or formula (VI), wherein the third monomer is different from the first monomer and the second monomer:

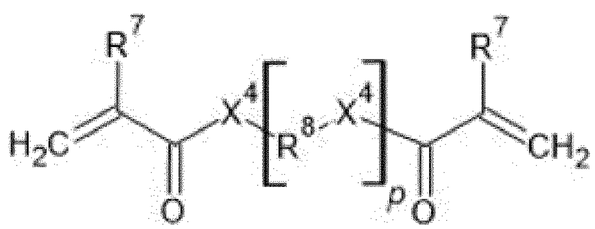

(V),

wherein $R^7$ is H or $CH_3$; $R^8$ is a $C_{2-6}$ alkanediyl, wherein the alkanediyl is optionally substituted with one or more substituents selected from halide, $C_{1-4}$ alkyl, $CF_3$ or $OR^9$, wherein $R^9$ is selected from hydrogen or $C_{1-4}$ alkyl; $X^4$ = NH or O; and p is an integer selected from 5-150, preferably 8-100, more preferably 10-50; or

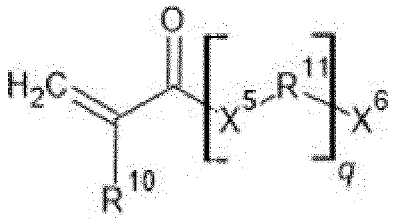

(VI),

wherein $R^{10}$ is H or $CH_3$; $R^{11}$ is a $C_{2-6}$ alkanediyl, wherein the alkanediyl is optionally substituted with one or more substituents selected from halide, $C_{1-4}$ alkyl, $CF_3$ or $OR^{12}$, wherein $R^{12}$ is selected from hydrogen or $C_{1-4}$ alkyl; $X^5$ = NH or O; $X^6$ = SH, $NH_2$ or OH and q is an integer selected from 1-10, preferably 1-5, more preferably q = 1

A preferred embodiment of the invention is the copolymer obtainable by the reaction between at most two monomers, wherein the two monomers are the first monomer represented by formula (I) and the second monomer represented by formula (II).

A highly preferred embodiment of the invention is the copolymer obtainable by the reaction between at most two monomers, wherein the two monomers are the first monomer being poly(ethylene glycol) diacrylate and the second monomer being 2-hydrxoyethylacrylamide.

In a preferred embodiment, the weight ratio of the first monomer to the second monomer is between 1:5 and 8:1, preferably between 1:3 and 7:1, more preferably between 1:2 and 5:1, most preferably between 1:2 and 2:1.

In a preferred embodiment, the copolymer is present in an amount more than 20 wt.% by total weight of the conductive layer, preferably more than 30 wt.%, most preferably more than 50 wt.% by total weight of the conductive layer. In a preferred embodiment, the copolymer is present in an amount less than 80 wt.% by total weight of the conductive layer, preferably less than 75 wt.%, most preferably less than 70 wt.% by total weight of the conductive layer. In a preferred embodiment, the copolymer is present in an amount in the range of 20-80 wt.% based on the total amount of conductive layer, preferably in the range 30-75 wt.%, more preferably in the range of 50-70 wt.% by total weight of the conductive layer.

In a preferred embodiment, the copolymer is present in an amount more than 20 wt.% by total weight of the protective layer, preferably more than 30 wt.%, most preferably more than 35 wt.% by total weight of the protective layer. In a preferred embodiment, the copolymer is present in an amount less than 80 wt.% by total weight of the protective layer, preferably less than 75 wt.%, most preferably less than 50 wt.% by total weight of the protective layer. In a preferred embodiment, the copolymer is present in an amount in the range of 20-80 wt.% based on the total amount of protective layer, preferably in the range 30-75 wt.%, more preferably in the range of 35-50 wt.% by total weight of the protective layer.

A particular example of the copolymer according to the invention is represented by formula (VII)

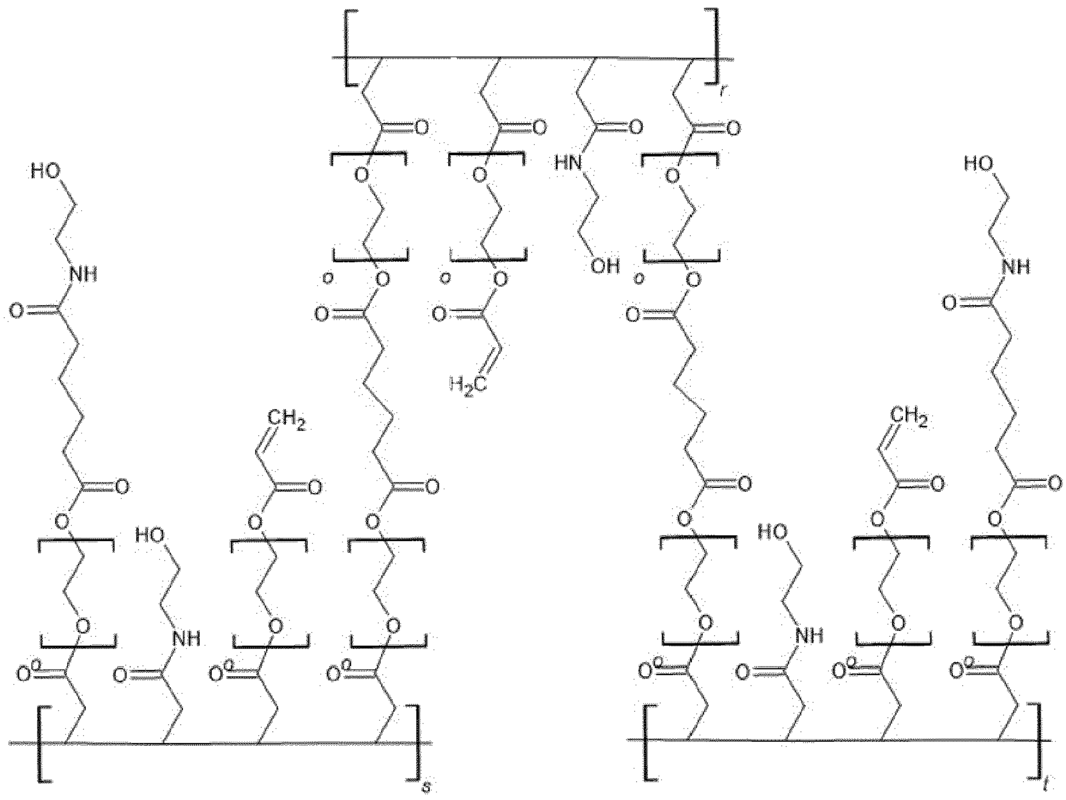

(VII),

wherein *o* is an integer selected from 5-150, preferably 8-100, more preferably 10-50 and *r, s* and *t* are an integer independently selected from 1-10, preferably from 2-8, most preferably from 3-6. However and as appreciated by the skilled person, the copolymer according to the invention is not limited to formula (VII) and is shown as an exemplary embodiment.

In a highly preferred embodiment of the invention the copolymer according to the invention, and therefore the protective layer according to the invention and the conductive layer according to the invention, has/have self-healing properties, as demonstrated in the examples below.

In a preferred embodiment of the invention, the copolymer, the protective layer and/or the conductive layer according to the invention is/are subjected to a thermal annealing step. As appreciated by the skilled person thermal annealing is a common process used in materials chemistry to relieve stress, improve homogeneity and enhance contact with a substrate. In particular, thermal annealing is a process at which the temperature T of the part coated by a coating is at first increased from room temperature to a maximal (operation) temperature $T_{max}$, preferably at a temperature T above recrystallization temperature of the copolymer according to the invention and/or the protective layer according to the invention, and later, after finishing the operation (e.g. cutting), the temperature is decreased back to room temperature. In a highly preferred embodiment the thermal annealing step occurs after the UV-curing of the copolymer at temperature in the range between 40 and 100 °C, preferably in the range between 50 and 90 °C, more preferably in the range between 60 and 80 °C and/or the duration of the thermal annealing is between 5 minutes and 10 hours, preferably between 15 minutes and 5 hours, most preferably between 30 minutes and 90 minutes. In a highly preferred embodiment the thermal annealing step according to the invention occurs in dry air. The present inventors have now surprisingly found that thermal annealing step improves the conductivity of the copolymer. In addition, each copolymer subjected to the thermal annealing step appears more homogenous and has a better contact with the Li surface. Moreover, the inventors have found that after the thermal annealing step the charge transfer resistance ($R_{ct}$) of the negative electrode according to the invention is reduced.

*First lithium salt*

As described above the protective layer according to the invention comprises a first lithium salt.

In an embodiment of the invention the first lithium salt is selected from the group consisting of $Li_2CO_3$, $Li_2O$, $Li_2C_2O_4$, LiOH, $LiX^7$, $ROCO_2Li$, HCOLi, $R^{13}OLi$, $Li_2O$, $Li_2C_2O_4$, $(R^{13}OCO_2Li)_2$, $(CH_2OCO_2Li)_2$, $Li_2S$, LiSCN, $LiN(CN)_2$, $LiClO_4$, $LiBF_4$, $LiAsF_6$, $LiPF_6$, $LiCF_3SO_3$, $LiC(CF_3SO_2)_3$, $LiN(SO_2C_2F_5)_2$, $LiN(SO_2CF_3)_2$, $LiN(SO_2F)_2$, $LiSbF_6$, $LiPF_3$

$(CF_2CF_3)_3$, $LiPF_3(CF_3)_3$, $LiB(C_2O_4)_2$ and a combination thereof, wherein $R^{13}$ = a hydrocarbon and $X^7$ = F, Cl, I or Br; preferably selected from the group consisting of LiSCN, $LiN(CN)_2$, $LiClO_4$, LiI, $LiBF_4$, $LiAsF_6$, $LiCF_3SO_3$, $LiCF_3(SO_3)_2$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$ and a combination thereof; more preferably the first lithium salt is $LiN(SO_2CF_3)_2$ or $LiN(SO_2F)_2$; most preferably the first lithium salt is $LiN(SO_2F)_2$.

In a preferred embodiment of the invention the amount of the first lithium salt is more than 5 wt.% by total weight of the conductive layer, preferably more than 10 wt.% by total weight of the conductive layer, most preferably more than 40 wt.% by total weight of the conductive layer. In a preferred embodiment of the invention the amount of the first lithium salt is less than 70 wt.% by total weight of the conductive layer, preferably less than 65 wt.%, most preferably less than 60 wt.% by total weight of the conductive layer. In a preferred embodiment of the invention the amount of the first lithium salt is between 5 and 70 wt.% by total weight of the conductive layer, preferably between 10 and 65 wt.%, more preferably between 40 and 60 wt.% by total weight of the conductive layer.

In a preferred embodiment of the invention the amount of the first lithium salt is more than 10 wt.% by total weight of the protective layer, preferably more than 40 wt.% by total weight of the protective layer, most preferably more than 50 wt.% by total weight of the protective layer. In a preferred embodiment of the invention the amount of lithium salt is less than 70 wt.% by total weight of the protective layer, preferably less than 65 wt.%, most preferably less than 60 wt.% by total weight of the protective layer. In a preferred embodiment of the invention the amount of the lithium salt is between 10 and 70 wt.% by total weight of the protective layer, preferably between 40 and 65 wt.%, more preferably between 50 and 65 wt.% by total weight of the protective layer.

The present inventors have found that the addition of the lithium salt improves the Li-ion conductivity of the protective layer and/or the conductive layer and prevents the protective layer and/or the conductive layer from depleting the lithium ions present in the electrolyte. Moreover, the addition of higher lithium salt contents to the protective layer results in a reduction of the uncompensated resistance $R_u$.

*Protective layer*

In an embodiment of the invention the protective layer has a thickness between 1 and 10 $\mu$m, preferably between 2 and 7 $\mu$m, more preferably between 3 and 6 $\mu$m.

In an embodiment of the invention the protective layer is disposed directly on at least a part of the metal substrate, preferable the protective layer is disposed directly on the entire surface of the metal substrate. As appreciated by the skilled person the negative electrode according to the invention comprises the protective layer according to the invention, wherein the protective layer forms an outer layer on the metal substrate. Worded differently, the protective layer is coated on a part of the surface of the metal substrate, i.e. the protective layer forms a coating on a part of the surface of the metal substrate, preferably on the entire surface of the metal substrate.

In a preferred embodiment of the invention the protective layer according to the invention has an ion-conductivity of more than 0.01 mS/cm, preferably more than 0.015 mS/cm, more preferably more than 0.05 mS/cm. In a preferred embodiment of the invention the protective layer has an ion-conductivity of less than 0.5 mS/cm, preferably less than 0.2 mS/cm, more preferably less than 0.1 mS/cm. In a preferred embodiment of the invention the protective layer according to the invention has ion-conductivity in the range of 0.01 - 0.5 mS/cm, preferably in the range of 0.015 -0.2 mS/cm, most preferably in the range of 0.05 - 0.1. mS/cm. The ion-conductivity of the protective layer is measured through quantification of the uncompensated resistance $R_u$ via electronic impedance spectroscopy (EIS) in symmetrical Li-Li cells, wherein the ion-conductivity is measured after cell construction e.g. meaning in a battery comprising the negative electrode according to the invention and an electrolyte composition.

A further aspect of the invention is a method for preparing the protective layer according to the invention comprising the following steps:

i) adding the first monomer as defined above, the second monomer as defined above, the initiator as defined above and the first lithium salt as defined above are added to the organic liquid as defined above,
ii) subjecting the mixture obtained in step i) to the crosslinking step as defined above, and
iii) optionally subjecting the crosslinked mixture of step ii) to the thermal annealing step as defined above.

A further aspect of the invention is the protective layer obtainable by the method for preparing the protective layer in accordance with the invention.

*Conductive layer*

In an embodiment of the invention the conductive layer has a thickness between 1 and 10 $\mu$m, preferably between 2 and 7 $\mu$m, more preferably between 3 and 6 $\mu$m.

In an embodiment of the invention the conductive layer is disposed directly on at least a part of the metal substrate, preferable the conductive layer is disposed directly on the entire surface of the metal substrate. As appreciated by the skilled person the negative electrode according to the invention comprises the conductive layer according to the invention, wherein the conductive layer forms an outer layer on the metal substrate. Worded differently, the conductive layer is coated on a part of the surface of the metal substrate, i.e. the conductive layer forms a coating on a part of the surface of the metal substrate, preferably on the entire surface of the metal substrate.

In a preferred embodiment of the invention the conductive layer according to the invention has an ion-conductivity of more than 0.005 mS/cm, preferably more than 0.01 mS/cm, more preferably more than 0.015 mS/cm. In a preferred embodiment of the invention the protective layer has an ion-conductivity of less than 1.5 mS/cm, preferably less than 1.2 mS/cm, more preferably less than 1 mS/cm. In a preferred embodiment of the invention the conductive layer according to the invention has an ion-conductivity in the range of 0.005 - 1.5 mS/cm, preferably in the range of 0.01 -1.2 mS/cm, most preferably in the range of 0.015 - 1 mS/cm The ion-conductivity of the protective layer is measured through quantification of the uncompensated resistance $R_u$ via electronic impedance spectroscopy (EIS) in symmetrical Li-Li cells, wherein the ion-conductivity is measured after cell construction e.g. meaning in a battery comprising the negative electrode according to the invention and an electrolyte composition.

A further aspect of the invention is a method for preparing the conductive layer according to the invention comprising the following steps:

i) adding the first monomer as defined above, the second monomer as defined above, the initiator as defined above, the lithium salt as defined above and the fluoropolymer additive as defined above are added to the organic liquid as defined above,
ii) subjecting the mixture obtained in step i) to the crosslinking step as defined above, and
iii) optionally subjecting the crosslinked mixture of step ii) to the thermal annealing step as defined above.

A further aspect of the invention is the conductive layer obtainable by the method for preparing the conductive layer in accordance with the invention.

*Negative electrode*

A further aspect of the invention is the negative electrode according to the invention comprising:

a. a metal substrate, and
b. the protective layer obtainable by the method for preparing the protective layer according to the invention the invention disposed directly on at least a part of the metal substrate and/or the conductive layer obtainable by the method for preparing the conductive layer according to the invention the invention disposed directly on at least a part of the metal substrate.

A further aspect of the invention is a method for preparing a negative electrode for a battery comprising the following steps:

i) adding the first monomer as defined above, the second monomer as defined above, the initiator as defined above, the lithium salt as defined above and optionally the fluoropolymer additive as defined above to the organic liquid as defined above;
ii) coating the mixture obtained in step i) on at least a part of the metal substrate, preferably on the entire surface of the metal substrate;
iii) subjecting the coated metal substrate of step ii) to the crosslinking step as defined above, and
iv) optionally subjecting the crosslinked coated metal substrate of step iii) to the thermal annealing step as defined above.

In an embodiment of the invention the amount of solids (*i.e.* the sum of the first monomer, the second monomer, the initiator, the lithium salt and the fluoropolymer additive) is more than 1 wt.% by total weight of the solids and the liquid, preferably more than 2 wt.%, most preferably more than 3 wt.% by total weight of solids and liquid. In an embodiment of the invention the amount of solids (*i.e.* the sum of the first monomer, the second monomer, the initiator, the lithium salt and the fluoropolymer additive) is less than 10 wt.% by total weight of the solids and the liquid, preferably less than 8 wt.%, most preferably less than 5 wt.% by total weight of solids and liquid. In an embodiment of the invention the amount of solids (*i.e.* the sum of the first monomer, the second monomer, the initiator, the lithium salt and the fluoropolymer additive) is between 1 and 10 wt.% by total weight of the solids and the liquid, preferably between 2 and 8 wt.%, most preferably between 3 and 5 wt.% by total weight of solids and liquid.

The coating step may be performed using methods used in conventional wet processes as understood by the skilled person, such as spin coating, spray coating, doctor blade coating, dip coating, and the like.

Optionally, a drying step is performed after the coating step. The drying step may be properly performed at a temperature greater than or equal to a boiling point of the organic liquid and a temperature less than or equal to a glass transition temperature $T_g$ of the copolymer according to the invention and/or the protective layer according to the invention. The drying step may also be performed to remove the liquid remaining on a surface of the metal substrate and simultaneously improve adhesion of the copolymer according to the invention and/or the protective layer according to the invention.

A further aspect of the invention is the negative electrode obtainable by the method for preparing the negative electrode for a battery according to the invention.

*Battery*

A further aspect of the invention is a battery comprising

a. the negative electrode according to the invention or the negative electrode obtainable by the method for preparing the negative electrode for a battery according to the invention,
b. a positive electrode,
c. an electrolyte composition, preferably the composition is disposed between the positive electrode and the negative electrode, and
d. optionally a separator.

In a preferred embodiment of the invention the battery is a lithium metal battery, preferably a lithium metal secondary battery.

*Positive electrode*

The material of the positive electrode (*i.e.* cathode) is not particularly limited, and examples thereof include a transition metal compound having a structure capable of diffusing lithium ions, or a specialized metal compound thereof and an oxide of lithium. In particular, $LiCoO_2$, $LiNiO_2$, $LiMnO_4$, $LiFePO_4$, etc. can be mentioned. Preferred positive electrode materials are mixed metal oxides comprising lithium, nickel and optionally manganese, cobalt and/or aluminum.

In a preferred embodiment of the invention the positive electrode comprises a positive electrode material selected from the group consisting of lithium nickel-manganese-cobalt oxide, lithium nickel-manganese oxide, lithium nickel-cobalt-aluminum oxide, lithium cobalt oxide, lithium iron phosphate, lithium iron manganese phosphate, lithium iron cobalt phosphate, lithium sulphide, sulphur and aluminum; preferably the positive electrode material is lithium nickel-manganese-cobalt oxide or lithium nickel-cobalt-aluminum oxide.

The positive electrode can be formed by press-molding the positive electrode material listed above together with a known conductive auxiliary agent or binder, or the positive electrode active material together with a known conductive auxiliary agent or binder into an organic liquid such as pyrrolidone. It can be obtained by applying a mixture and pasting it to a current collector such as an aluminum foil, followed by drying.

*Electrolyte composition*

In an embodiment of the invention the battery according to the invention comprises an electrolyte composition, preferably a liquid electrolyte composition. In a preferred embodiment the electrolyte composition is disposed between the positive electrode and the negative electrode.

In an embodiment of the invention the electrolyte composition comprises

i. an organic non-fluorinated liquid comprising a second lithium salt, and
ii. a fluorinated liquid.

In a preferred embodiment of the invention the organic non-fluorinated liquid is selected from the group consisting of *N*-methyl-2-pyrrolidone, propylene carbonate, ethylene carbonate, butylene carbonate, dimethyl carbonate, diethyl carbonate, ethylmethyl carbonate, γ-butyrolactone, 1,2-dimethoxy ethane, 1,2-diethoxy ethane, tetrahydrofuran 2-methyl tetrahydrofuran, dimethylsulfoxide, 1,3-dioxolane, 4-methyl-1,3-dioxene, diethyl ether, allyl ether, diethylene glyol dimethyl ether (diglyme), triethylene glycol dimethyl ether (triglyme), tetraethylene glycol diemethyl ether (tetraglyme), butyl diglyme, polyethylene glycol, formamide, dimethyl formamide, dioxolane, acetonitrile, nitromethane, methyl formate, methyl acetate, triester phosphate, tirmethoxymethane, sulfolane, methyl sulfolane, 1,3-dimethyl-2-imidazolidone,

methyl propionate, ethyl propionate, 1,4-dioxane, trimethyl phosphate (TMPa), triethyl phosphate (TEPa), dimethyl methylphosphonate (DMMP), hexamethyldisiloxane, hexamethylcyclotrisiloxane, and a combination thereof; preferably the organic non-fluorinated liquid is selected from the group consisting of 1,3-dioxolane, 1,4-dioxane, tetrahydrofuran, allyl ether, diethylene glycol dimethyl ether, triethylene glycol dimethyl ether, tetraethylene glycol dimethyl ether, butyl diglyme, dimethyl ether, diethyl ether, polyethylene glycol, acetonitrile, dimethyl sulfoxide, sulfolane, trimethyl phosphate, triethyl phosphate, dimethyl methylphosphonate, hexamethyldisiloxane, hexamethylcyclotrisiloxane, 1,2-dimethoxy methane or 1,2-diethoxy ethane; most preferably the non-fluorinated organic liquid is 1,2-dimethoxy methane or 1,2-dimethoxy ethane.

In a preferred embodiment of the invention the second lithium salt is selected from the group consisting of $Li_2CO_3$, $Li_2O$, $Li_2C_2O_4$, LiOH, $LiX^8$, $R^{14}OCO_2Li$, HCOLi, $R^{14}OLi$, $Li_2O$, $Li_2C_2O_4$, $(R^{14}OCO_2Li)_2$, $(CH_2OCO_2Li)_2$, $Li_2S$, LiSCN, $LiN(CN)_2$, $LiClO_4$, $LiBF_4$, $LiAsF_6$, $LiPF_6$, $LiCF_3SO_3$, $LiC(CF_3SO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$ wherein $R^{14}$ = a hydrocarbon and $X^8$ = F, Cl, I or Br; preferably LiSCN, $LiN(CN)_2$, $LiClO_4$, LiI, $LiBF_4$, $LiAsF_6$, $LiCF_3SO_3$, $LiCF_3(SO_3)_2$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$ and a combination thereof; more preferably the lithium salt is $LiN(SO_2CF_3)_2$ or $LiN(SO_2F)_2$; most preferably the lithium salt is $LiN(SO_2F)_2$.

In a highly preferred embodiment the first lithium salt as described above and the second lithium salt are the same lithium compound.

In a preferred embodiment of the invention the concentration of the second lithium salt in the organic non-fluorinated liquid is higher than 1 M, preferably higher than 2 M, most preferably higher than 3 M. In a preferred embodiment of the invention the concentration of the second lithium salt in the organic non-fluorinated liquid is lower than 10 M, preferably lower than 8 M, most preferably lower than 6 M. In a preferred embodiment of the invention the concentration of the second lithium salt in the organic non-fluorinated liquid is within the range of 1 - 10 M, preferably within the range of 2 - 8 M, most preferably within the range of 3 - 6 M.

In an embodiment the fluorinated liquid is a fluorinated ether, a fluorinated carbonate or a fluorinated aromatic compound. In a preferred embodiment the fluorinated liquid is selected from the group consisting of 1,1,2,2-tetrafluoroethyl-2,2,3,3-tetrafluoropropyl ether (TTE), bis(2,2,2-trifluoroethyl) ether (BTFE), 1,1,2,2-tetrafluoroethyl-2,2,2-trifluoroethyl ether (TFTFE), tris(2,2,2-trifluoroethyl)orthoformate (TFEO), methoxynonafluorobutane (MOFB), ethoxynonafluorobutane (EOFB), di(2,2,2-trifluoroethyl) carbonate (DTFEC), tris(2,2,2-trifluoroethyl)orthoformate (TFEO), tris(hexafluoroisopropyl)orthoformate (THFiPO), tris(2,2-difluoroethyl)orthoformate (TDFEO), bis(2,2,2-trifluoroethyl) methyl orthoformate (BTFEMO), tris(2,2,3,3,3-pentafluoropropyl)orthoformate (TPFPO), tris(2,2,3,3-tetrafluoropropyl)orthoformate (TTPO) and a combination thereof; preferably the fluorinated liquid is 1,1,2,2-tetrafluoroethyl-2,2.3,3-tetrafluoropropyl ether (TTE), bis(2,2,2-trifluoroethyl) ether (BTFE) or 1,1,2,2-tetrafluoroethyl-2,2,2-trifluoroethyl ether (TFTFE); most preferably 1,1,2,2-tetrafluoroethyl-2,2,3,3-tetrafluoropropyl ether (TTE).

In a preferred embodiment the molar ratio of the second lithium salt to the organic non-fluorinated liquid is between 1:3 and 1:0.5 (mol/mol), preferably between 1:2 and 1:0.60 (mol/mol), more preferably between 1:1.60 and 1:0.80 (mol/mol), most preferably between 1:1.50 and 1:10.

In a preferred embodiment the molar ratio of the second lithium salt to the fluorinated liquid is between 1:2 and 1:0.15 (mol/mol), preferably between 1:1.85 and 1:0.25 (mol/mol), more preferably between 1:1.70 and 1:0.35 (mol/mol), even more preferably between 1:1.50 and 1:0.35 (mol/mol), most preferably between 1:1 and 1:0.40 (mol/mol).

In a preferred embodiment the molar ratio of the organic non-fluorinated liquid to the fluorinated liquid is between 1:2 and 1:0.10 (mol/mol), preferably between 1:1.50 and 1:0.20 (mol/mol), more preferably between 1:1.20 and 1:0.25 (mol/mol), even more preferably between 1:1 and 1:0.30 (mol/mol), most preferably between 1:0.85 and 1:0.30 (mol/mol).

In a preferred embodiment of the invention the volume ratio of the organic non-fluorinated liquid to the fluorinated liquid is between 6:1 to 1:2 (vol/vol), preferably between 5:1 to 1:1 (vol/vol), most preferably between 4:1 to 2:1 (vol/vol).

As appreciated by the skilled person the organic liquid according to the invention is the liquid used in the crosslinking step affording the copolymer according to the invention, whereas the organic non-fluorinated liquid according to the invention is the liquid present in the electrolyte composition according to the invention.

As appreciated by the skilled person the fluorinated liquid according to the invention comprises at least one fluoride substituent, whereas the organic non-fluorinated liquid has no fluoride substituent.

*Separator*

A separator is usually interposed between the positive electrode and the negative electrode in order to prevent a short circuit between the positive electrode and the negative electrode. The material and shape of the separator is not particularly limited, but it is preferable that the electrolyte composition can easily pass therethrough and that the separator is an insulator and a chemically stable material. Examples thereof include microporous films and sheets made of various polymer materials. Specific examples of the polymer material include polyolefin polymers, nitrocellulose, polyacrylonitrile, polyvinylidene fluoride, polyethylene, and polypropylene. From the viewpoints of electrochemical stability and chemical

stability, polyolefin polymers are preferred.

*Varia*

In a preferred embodiment of the invention the battery of the invention has a coulombic efficiency of at least 93%, preferably at least 94%, more preferably at least 95%, even more preferably at least 96%, even more preferably at least 97%, most preferably at least 98%. The coulombic efficiency is measured by using the following general formula:

$$CE = \frac{discharge\ capacity}{charge\ capacity} = \frac{Total\ number\ of\ Li^{+}\ ions\ back\ to\ cathode}{Total\ number\ of\ Li^{+} ions\ departing\ from\ cathode} = \frac{Total\ number\ of\ e^{-} back\ to\ cathode}{Total\ number\ of\ e^{-} departing\ from\ cathode}$$

**Uses**

It is a further aspect of the invention to provide a use of the battery according to the invention to reduce the uncompensated resistance $R_u$ of the battery.

It is a further aspect of the invention to provide a use of the battery according to the invention to reduce the charge transfer resistance $R_{ct}$ of the battery.

**EXAMPLES**

The invention is further illustrated in the following examples:

<u>Description of cell preparations and testing methods</u>

Tested coin cells were all types CR2032. The cells where prepared by stacking positive casing, positive electrode (pre-soaked in electrolyte), Cellguard-separator, 50 μL electrolyte droplet, negative electrode, spacer, wave-type spring and negative casing on top of each other in that order. Crimping was done with a manual crimping press from MTI corp. at 80 kg/cm$^2$ pressure.

The Li-Li pouch cells were prepared on the following matter: Format = 1Li(58x58mm)/1Sep(62x62mm)/1-Li(50x50mm); 'nominal capacity' = 0.1 Ah; separator = Targray SH220W22 alumina coated; lithium = 100 μm thick (coated or uncoated); electrolyte loading = 3.00 μL mAh$^{-1}$ (*i.e.* 0.3 mL); C-rate = C/5 D/5 (standard regime) or C/3 D/1 with potential holds (new regime); cycling temperature = 25°C.

The Li-NMC pouch cells were prepared on the following matter: Format = 3Li(58x58mm)/4-Sep(62x62mm)/2NMC(56x54mm); nominal capacity = 0.48 Ah (assumes cathode surface capacity of 4 mAh cm$^{-2}$); separator = Targray SH220W22 alumina coated; lithium = 100 μm thick; electrolyte loading = 2.00 μL mAh$^{-1}$ (i.e. 0.97 mL) or 1.75 μL mAh$^{-1}$ (i.e. 0.85 mL); C-rate = C/5 D/5 (standard regime) or C/3 D/1 with potential holds (new regime); cycling temperature = 25°C. The NMC cathode comprises of $LiNi_{0.6}Mn_{0.2}Co_{0.2}O_2$ as positive electrode active material, carbon black and PVDF in a 92:4:4 weight ratio.

The uncompensated resistance $R_u$ is measured through Electrochemical Impedance Spectroscopy (Nyquist plot) of Li-Li symmetrical coin cells containing lithium metal anodes which are coated or uncoated with the protective layer. A frequency of 1 MHz to 1 Hz was applied in the testing.

The charge transfer resistance $R_{ct}$ is measured through Electrochemical Impedance Spectroscopy (Nyquist plot) of Li-Li symmetrical coin cells containing lithium metal anodes which are coated or uncoated with the protective layer. A frequency of 1 MHz to 1 Hz was applied in the testing.

The ion-conductivity of the protective layer is measured through quantification of the uncompensated resistance $R_u$ via electronic impedance spectroscopy (EIS) in symmetrical Li-Li cells, wherein the ion-conductivity is measured after cell construction.

Cross-section of the protective layers were analyzed using a scanning electron microscope (SEM). A JEOL bench top SEM was used. (sample imaged under vacuum within SEM, secondary electron imaging, probe current - set at standard, accelerating voltage of the SEM column.)

The polymer protected anodes are prepared by adding the monomers, the lithium salt, the initiator and the fluoropolymer additive in an organic liquid in amounts as defined in the tables below. These mixtures are coated on the anode and subjected to UV-curing with Irgacure 819 as photo initiator with an UV-curing time of 5 min. Optionally, thermal annealing of the polymer occurs after UV-curing of the polymer protected anodes at 70 °C for 1 hour.

Example 1

To evaluate the effect of the amount of fluoropolymer additive the following polymer formulations 1-a, 1-b and 1-c were prepared (see Table 1; PEGDA = poly(ethylene glycol) diacrylate having $M_n$ = 700 g/mol, LiTFSI = $LiN(SO_2CF_3)_2$, PVDF-HFP = poly(vinylidene fluoride-co-hexafluoropropylene), THF = tetrahydrofuran)

Table 1: polymer formulation for optimization fluoropolymer additive

| Component | Formulation 1-a | Formulation 1-b | Formulation 1-c |
|---|---|---|---|
| PEGDA (g) | 43.5 | 43.5 | 43.5 |
| Photoinitiator (g) | 3 | 3 | 3 |
| LiTFSI | 10 | 10 | 10 |
| PVDF-HFP (g) | 43.5 | 14.5 | 4.83 |
| THF (g) | 1900 | 1900 | 1900 |
| Amount of solids (wt.%) | 5.0 | 3.6 | 3.1 |
| Weight ratio PEGDA: PVDF-HFP | 1:1 | 3:1 | 9:1 |

Figure 1 illustrates the effect of decreasing wt.% of the fluoropolymer additive in the polymer formulation on film continuity demonstrating that coating of Formulations 1-a and 1-b form a homogenous film on the lithium substrate, whereas reducing the amount of PVDF-HFP too far (9:1, Formulation 1-c) results in discontinuous and patchy film which exhibits a much lower uncompensated resistance ($R_u$). Figure 2 demonstrates the effect on the conductivity: the optimal PEG:PVDF-HFP ratio is 3:1, providing a continuous polymer film and resulting in a reduction of the $R_u$ when compared to Formulation 1-a.

Example 2

To evaluate the effect of the lithium salt the following polymer formulations 2-a, 2-b, 2-c and 2-d were prepared (see Table 2; PEGDA = poly(ethylene glycol) diacryalte having $M_n$ = 700 g/mol, LiTFSI = $LiN(SO_2CF_3)_2$, LiFSI = $LiN(SO_2F)_2$, PVDF-HFP = poly(vinylidene fluoride-co-hexafluoropropylene), THF = tetrahydrofuran)

Table 2: polymer formulation for optimization the Li-salt

| Component | Formulation 2-a | Formulation 2-b | Formulation 2-c | Formulation 2-d |
|---|---|---|---|---|
| PEGDA (g) | 43.5 | 43.5 | 43.5 | 43.5 |
| Photoinitiator (g) | 3 | 3 | 3 | 3 |
| LiTFSI (g) | 10 | 61 | / | / |
| LiFSI (g) | / | / | 10 | 61 |
| PVDF-HFP (g) | 14.5 | 14.5 | 14.5 | 14.5 |
| THF (g) | 1900 | 1900 | 1900 | 1900 |
| Amount of solids (wt.%) | 3.6 | 6.0 | 3.6 | 6.0 |

The conductivity data from each of the polymer formulations in Table 2 is presented in Figure 3. The issue of low film salt content (10 wt.%) in the polymer formulation is evident, as over the first 20 hours the $R_u$ of the Li-Li coin cell reduces as the resistive polymer formulation takes up salt from the electrolyte, a process which should be prevented. Increasing the salt content of the polymer formulation from 10 wt.% to 50 wt.% by total weight of the formulation results in a reduction of the $R_u$ (Formulations 2-b and 2-d display a similar uncompensated resistance of around 45-47 $\Omega$) of each of the cells resulting from the improved conductivity of the polymer film in each instance. The stability of the $R_u$ for films containing 50 wt.% salt from 0 to 60 hours indicates that transfer of ions between the polymer film and electrolyte is in equilibrium from cell construction and depletion of the electrolyte salt is avoided.

Example 3

To evaluate the effect of the N-hydroethyl acrylamide monomer the following polymer formulations 4-a, 4-b, 4-c and 4-d were prepared (see Table 3; PEGDA = poly(ethylene glycol) diacryalte having $M_n$ = 700 g/mol, HEAA = N-hydroxyethyl acrylamide, PVDF-HFP = poly(vinylidene fluoride-co-hexafluoropropylene), THF = tetrahydrofuran)

Table 3: polymer formulation for optimization the N-hydroethyl acrylamide monomer

| Component | Formulation 4-a | Formulation 4-b | Formulation 4-c | Formulation 4-d |
|---|---|---|---|---|
| PEGDA (g) | 43.5 | 39.15 | 32.66 | 21.75 |
| HEAA (g) | / | 4.35 | 10.87 | 21.75 |
| Photoinitiator (g) | 3 | 3 | 3 | 3 |
| $LiN(SO_2F)_2$ (g) | 61 | 61 | 61 | 61 |
| PVDF-HFP (g) | 14.5 | 14.5 | 14.5 | 14.5 |
| THF (g) | 1900 | 1900 | 1900 | 1900 |
| Amount of solids (wt.%) | 6.0 | 6.0 | 6.0 | 6.0 |
| Weight ratio PEGDA:HEAA | / | 9:1 | 3:1 | 1:1 |

Protective layers of each formulation were coated onto a lithium substrate, cured and cut by dragging a scalpel across the coated surface. The cut sample was imaged by SEM and then the sample was soaked in 4.5 M LiFSI in 1,2-dimethoxyethane (DME) overnight (16 hours). The film was rinsed with pure DME to remove the excess of LiFSI salt allowing clearer SEM micrographs, dried and observed under SEM. The results for each of the polymer formulations in Table 3 are displayed in Figure 4

As expected Formulation 4-a (0 wt.% HEAA) (1:0) shows no self-healing properties, due to its lack of hydrogen bond donors. The protective containing the lowest amount of HEAA (Formulation 4-b) also shows no evidence of self-healing under these conditions. Increasing the HEAA content to a weight ratio PEGDA:HEAA 3:1 results in a resealing of the polymer film at the site of the incision made in. Finally, Formulation 4-d (weight ratio PEGDA:HEAA 1:1 w/w) also shows substantial self-healing properties (see Figure 4). Additionally, it is worth noting that Formulation 4-d appears to have better adhesion to the Li metal surface when observed under SEM as compared to the other formulations .

Each polymer formulation was then tested in Li-NMC cells against reference cells (no polymer). Cells were cycles with (4.5 M LiFSI in DME):TTE (3:1, vol/vol; TTE = 1,1,2,2-tetra-fluoroethyl 2,2,3,3-tetrafluoropropyl ether) at a loading of 1.75 $\mu$L $mAh^{-1}$ under a fixed volume pressure of 0.06 MPa using foam (80x80 mm) with cycling regime of C/3-D/1. Each polymer protected cell performed similarly to the refence cells (see Figures 5 and 6).

In a next step the conductivity of each polymer formulation was evaluated before and after thermal annealing (1 hour at 70 °C in dry air) and the results are depicted in Figure 7(a) and Figure 7(b), respectively. Clearly, thermal annealing improves the conductivity of the polymer film. Increasing film conductivity to a minimum threshold of around 0.1 mS $cm_{-1}$ is considered vital for successful anode protection. A higher conductivity results in a lower energetic barrier to plating underneath the polymer film, which reduces dendrite penetration, reduces the amount of dead lithium and helps to prolong functionality of the electrolyte and lithium anode. It was also observed that each polymer formulation appeared more homogenous and had better contact with the lithium surface.

Each polymer formulation after annealing then tested in Li-NMC cells against reference cells (no polymer). Cells were cycles with (4.5 M LiFSI in DME):TTE (3:1, vol/vol; TTE = 1,1,2,2-tetra-fluoroethyl 2,2,3,3-tetrafluoropropyl ether) at a loading of 1.75 $\mu$L $mAh^{-1}$ under a fixed volume pressure of 0.06 MPa using foam (80x80 mm) with cycling regime of C/3-D/1. Each thermally annealed polymer protected cell performed similarly and up to 20% better as compared to the refence cells (see Figures 8 and 9).

Example 4

A systematic screening of electrolytes was performed, wherein a solution of 5.23 M LiFSI in DME (= mol ratio of LiFSI to DME = 1:1) was diluted with various volume ratios of TTE. Pouch cells were tested at the standard regime of C/5 - D/5, with the initial cycle at slower rate of C/10-D/10, in the voltage window of 3.0 V - 4.3 V at 25°C. The electrolyte ratio was kept at 2 $\mu$L $mAh^{-1}$. As shown in Figure 10 the addition of no TTE (5.23 M LiFSI in DME) or the addition of high volumes of TTE ((5.23 M LiFSI in DME):TTE 1:2 vol/vol) display a decreased cycle life as compared to the other dilutions ((5.23 MLiFSI in DME):TTE 3:1, 2:1 and 1:1 vol/vol). The incomplete results for ((5.23 M LiFSI in DME):TTE 3:1 vol/vol) is attributed to a bad cell build.

Example 5

The charge transfer resistance $R_{ct}$ and uncompensated resistance $R_u$ for a lithium metal substrate coated with no polymer (bare Li) or with Formulations 4-a, 4-b and 4-c were measured (see Figure 11) at different cycling temperatures have been evaluated. In the presence of 4.5 M LiFSI in DME with TTE ((4.5 M LiFSI in DME):TTE 3:1 v/v) the polymer films with more HEAA in the backbone show a reduced charge transfer resistance $R_{ct}$ and uncompensated resistance $R_u$ as compared to the polymer protected anodes without the presence of TTE in the electrolyte composition.

## Claims

**1.** A battery comprising

a. a negative electrode comprising

- a metal substrate, and
- a protective layer disposed directly on at least a part of the metal substrate, wherein the protective layer comprises

◦ a copolymer obtainable by the reaction between:

- a first monomer represented by formula (I)

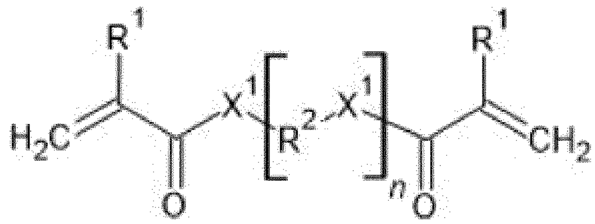

(I),

wherein $R^1$ = H or $CH_3$; $R^2$ is a $C_{2-6}$ alkanediyl, wherein the alkanediyl is optionally substituted with one or more substituents selected from halide, $C_{1-4}$ alkyl, $CF_3$ or $OR^3$, wherein $R^3$ is selected from hydrogen or $C_{1-4}$ alkyl; $X^1$ = NH or O; and *n* is an integer selected from 5-150, preferably 8-100, more preferably 10-50; and

- a second monomer represented by formula (II)

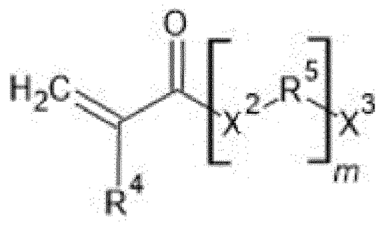

(II),

wherein $R^4$ = H or $CH_3$; $R^5$ is a $C_{2-6}$ alkanediyl, wherein the alkanediyl is optionally substituted with one or more substituents selected from halide, $C_{1-4}$ alkyl, $CF_3$ or $OR^6$, wherein $R^6$ is selected from hydrogen or $C_{1-4}$ alkyl; $X^2$ = NH or O; $X^3$ = SH, $NH_2$ or OH and *m* is an integer selected from 1-10, preferably 1-5, more preferably *m* = 1; and

◦ a first lithium salt;

b. a positive electrode, and

c. an electrolyte composition comprising

i. an organic non-fluorinated liquid comprising a second lithium salt, and

ii. a fluorinated liquid, wherein the molar ratio of the second lithium salt to the fluorinated liquid is between 1:2 and 1:0.15 (mol/mol).

**2.** The battery according to claim 1, wherein the molar ratio of the second lithium salt to the organic non-fluorinated liquid is between 1:3 and 1:0.5 (mol/mol), preferably between 1:2 and 1:0.60 (mol/mol), more preferably between 1:1.60 and 1:0.80 (mol/mol), most preferably between 1:1.50 and 1:10.

**3.** The battery according to claim 1 or 2, wherein the molar ratio of the organic non-fluorinated liquid to the fluorinated liquid is between 1:2 and 1:0.10 (mol/mol), preferably between 1:1.50 and 1:0.20 (mol/mol), more preferably between 1:1.20 and 1:0.25 (mol/mol), even more preferably between 1:1 and 1:0.30 (mol/mol), most preferably between 1:0.85 and 1:0.30 (mol/mol).

**4.** The battery according to any one of claims 1-3, wherein the negative electrode comprises a conductive layer consisting of the protective layer as defined in claim 1 and a fluoropolymer additive and wherein the fluoropolymer additive is selected from the group consisting of polytetrafluoroethylene (PTFE), polyvinylidene fluoride (PVDF), a tetrafluoroethylene-perfluoro alkylvinyl ether copolymer, poly(vinylidene fluoride-co-hexafluoropropylene) (PVDF-HFP), a vinylidene fluoride-chlorotrifluoroethylene copolymer, an ethylene-tetrafluoroethylene copolymer, a polychlorotrifluoroethylene, vinylidene fluoride-pentafluoropropylene copolymer, a propylenetetrafluoroethylene copolymer, an ethylenechlorotrifluoroethylene copolymer, a vinylidene fluoride-hexafluoropropylene-tetrafluoroethylene copolymer, a vinylidene fluoride-perfluoromethylvinyl ether-tetrafluoroethylene copolymer and a combination thereof, preferably the fluoropolymer additive is polyvinylidene fluoride or poly(vinylidene fluoride-co-hexafluoropropylene), most preferably poly(vinylidene fluoride-co-hexafluoropropylene).

**5.** The battery according to claim 4, wherein the weight ratio of the copolymer to the fluoropolymer additive is between 1:10 and 10:1 (w/w), preferably between 1:5 and 8:1 (w/w), more preferably between 1:2 and 5:1 (w/w), even more preferably between 1:2 and 4:1 (w/w), most preferably between 2:1 and 4:1 (w/w).

**6.** The battery according to any one of claims 1-5, wherein the first lithium salt is selected from the group consisting of $Li_2CO_3$, $Li_2O$, $Li_2C_2O_4$, LiOH, $LiX^7$, $R^{13}OCO_{2L}i$, HCOLi, $R^{13}OLi$, $Li_2O$, $Li_2C_2O_4$, $(ROCO_2Li)_2$, $(CH_2OCO_2Li)_2$, $Li_2S$, LiSCN, $LiN(CN)_2$, $LiClO_4$, $LiBF_4$, $LiAsF_6$, $LiPF_6$, $LiCF_3SO_3$, $LiC(CF_3SO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$ and a combination thereof, wherein $R^{13}$ = a hydrocarbon and $X^7$ = F, Cl, I or Br; preferably selected from the group consisting of LiSCN, $LiN(CN)_2$, $LiClO_4$, LiI, $LiBF_4$, $LiAsF_6$, $LiCF_3SO_3$, $LiCF_3(SO_3)_2$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$and a combination thereof; more preferably the lithium salt is $LiN(SO_2CF_3)_2$ or $LiN(SO_2F)_2$; most preferably the lithium salt is $LiN(SO_2F)_2$.

**7.** The battery according to any one of claims 1-6, wherein the first monomer is represented by formula (III)

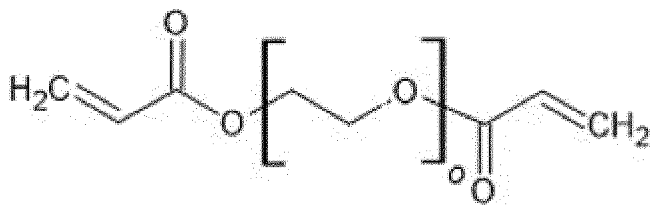

(III),

wherein o is an integer selected from 5-150, preferably 8-100, more preferably 10-50.

**8.** The battery according to any one of claims 1-7, wherein the second monomer is represented by formula (IV)

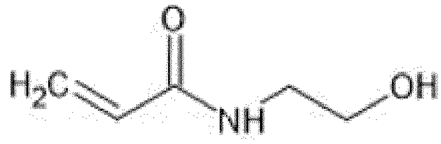

(IV).

9. The battery according to any one of claims 1-8, wherein the weight ratio of the first monomer to the second monomer is between 1:20 and 20:1 (w/w), preferably between 1:10 to 14:1 (w/w), more preferably between 1:5 and 12:1 (w/w), even more preferably between 1:3 and 10:1 (w/w), most preferably between 1:2 and 2:1 (w/w).

10. The battery according to any one of claims 1-9, wherein the copolymer is obtained through the reaction of the first monomer and the second monomer through the use of a photo initiator.

11. The battery according to any one of claims 1-10, wherein the copolymer is subjected to a thermal annealing step.

12. The battery according to any one of claims 1-11, wherein the second lithium salt is selected from the group consisting of $Li_2CO_3$, $Li_2O$, $Li_2C_2O_4$, LiOH, $LiX^8$, $R^{14}OCO_2Li$, HCOLi, $R^{14}OLi$, $Li_2O$, $Li_2C_2O_4$, $(ROCO_2Li)_2$, $(CH_2OCO_2Li)_2$, $Li_2S$, LiSCN, $LiN(CN)_2$, $LiClO_4$, $LiBF_4$, $LiAsF_6$, $LiPF_6$, $LiCF_3SO_3$, $LiC(CF_3SO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$ wherein $R^{14}$ = a hydrocarbon and $X^8$ = F, Cl, I or Br; preferably LiSCN, $LiN(CN)_2$, $LiClO_4$, LiI, $LiBF_4$, $LiAsF_6$, $LiCF_3SO_3$, $LiCF_3(SO_3)_2$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$ and a combination thereof; more preferably the lithium salt is $LiN(SO_2CF_3)_2$ or $LiN(SO_2F)_2$; most preferably the lithium salt is $LiN(SO_2F)_2$.

13. The battery according to any one of claims 1-12, wherein the organic non-fluorinated liquid is selected from the group consisting of N-methyl-2-pyrrolidone, propylene carbonate, ethylene carbonate, butylene carbonate, dimethyl carbonate, diethyl carbonate, ethylmethyl carbonate, $\gamma$-butyrolactone, 1,2-dimethoxy ethane, 1,2-diethoxy ethane, tetrahydrofuran 2-methyl tetrahydrofuran, dimethylsulfoxide, 1,3-dioxolane, 4-methyl-1,3-dioxene, diethyl ether, allyl ether, diethylene glyol dimethyl ether (diglyme), triethylene glycol dimethyl ether (triglyme), tetraethylene glycol diemethyl ether (tetraglyme), butyl diglyme, polyethylene glycol, formamide, dimethyl formamide, dioxolane, acetonitrile, nitromethane, methyl formate, methyl acetate, triester phosphate, tirmethoxymethane, sulfolane, methyl sulfolane, 1,3-dimethyl-2-imidazolidone, methyl propionate, ethyl propionate, 1,4-dioxane, trimethyl phosphate (TMPa), triethyl phosphate (TEPa), dimethyl methylphosphonate (DMMP), hexamethyldisiloxane, hexamethylcyclotrisiloxane, and a combination thereof; preferably the organic non-fluorinated liquid is selected from the group consisting of 1,3-dioxolane, 1,4-dioxane, tetrahydrofuran, allyl ether, diethylene glycol dimethyl ether, triethylene glycol dimethyl ether, tetraethylene glycol dimethyl ether, butyl diglyme, dimethyl ether, diethyl ether, polyethylene glycol, acetonitrile, dimethyl sulfoxide, sulfolane, trimethyl phosphate, triethyl phosphate, dimethyl methylphosphonate, hexamethyldisiloxane, hexamethylcyclotrisiloxane, 1,2-dimethoxy ethane or 1,2-diethoxy ethane; most preferably the non-fluorinated organic liquid is 1,2-dimethoxy ethane.

14. The battery according to any one of claims 1-13, wherein the fluorinated liquid is selected from the group consisting of 1,1,2,2-tetrafluoroethyl-2,2,3,3-tetrafluoropropyl ether (TTE), bis(2,2,2-trifluoroethyl) ether (BTFE), 1,1,2,2-tetrafluoroethyl-2,2,2-trifluoroethyl ether (TFTFE), tris(2,2,2-trifluoroethyl)orthoformate (TFEO), methoxynonafluorobutane (MOFB), ethoxynonafluorobutane (EOFB), di(2,2,2-trifluoroethyl) carbonate (DTFEC), tris(2,2,2-trifluoroethyl) orthoformate (TFEO), tris(hexafluoroisopropyl)orthoformate (THFiPO), tris(2,2-difluoroethyl)orthoformate (TDFEO), bis(2,2,2-trifluoroethyl) methyl orthoformate (BTFEMO), tris(2,2,3,3,3-pentafluoropropyl)orthoformate (TPFPO), tris(2,2,3,3-tetrafluoropropyl)orthoformate (TTPO) and a combination thereof; preferably the fluorinated liquid is 1,1,2,2-tetrafluoroethyl-2,2.3,3-tetrafluoropr2opyl ether (TTE), bis(2,2,2-trifluoroethyl) ether (BTFE) or 1,1,2,2-tetrafluoroethyl-2,2,2-trifluoroethyl ether (TFTFE); most preferably 1,1,2,2-tetrafluoroethyl-2,2,3,3-tetrafluoropropyl ether (TTE).

15. The battery according to any one of claims 1-14, wherein the positive electrode comprises a positive electrode material selected from the group consisting of lithium nickel-manganese-cobalt oxide, lithium nickel-manganese oxide, lithium nickel-cobalt-aluminum oxide, lithium cobalt oxide, lithium iron phosphate, lithium iron manganese phosphate, lithium iron cobalt phosphate, lithium sulphide, sulphur and aluminum; preferably the positive electrode

material is lithium nickel-manganese-cobalt oxide or lithium nickel-cobalt-aluminum oxide.

## Patentansprüche

**1.** Batterie, umfassend

a. eine negative Elektrode, umfassend

- ein Metallsubstrat, und
- eine Schutzschicht, die direkt auf zumindest einem Teil des Metallsubstrats angeordnet ist, wobei die Schutzschicht Folgendes umfasst

  ◦ ein Copolymer, das erhalten werden kann durch die Reaktion zwischen:

  - einem ersten Monomer, repräsentiert durch

Formel (I)

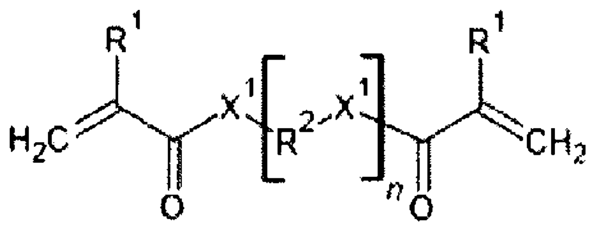

(I),

wobei $R^1$ = H oder $CH_3$; wobei $R^2$ ein $C^{2-6}$-Alkandiyl ist, wobei das Alkandiyl gegebenenfalls mit einem oder mehreren Substituenten substituiert ist, die ausgewählt sind aus Halogenid, $C_{1-4}$-Alkyl, $CF_3$ oder $OR^3$, wobei $R^3$ ausgewählt ist aus Wasserstoff oder $C_{1-4}$-Alkyl; wobei $X^1$ = NH oder O; und wobei n eine ganze Zahl ist, die ausgewählt ist aus 5-150, vorzugsweise 8-100, stärker bevorzugt 10-50; und

  - ein zweites Monomer, repräsentiert durch

Formel (II)

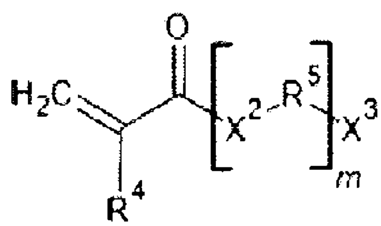

(II),

wobei $R^4$ = H oder $CH_3$; wobei $R^5$ ein $C_{2-6}$-Alkandiyl ist, wobei das Alkandiyl gegebenenfalls mit einem oder mehreren Substituenten substituiert ist, die ausgewählt sind aus Halogenid, $C_{1-4}$-Alkyl, $CF_3$ oder $OR^6$, wobei $R^6$ ausgewählt ist aus Wasserstoff oder $C_{1-4}$-Alkyl; wobei $X^2$ = NH oder O; wobei $X^3$ = SH, $NH_2$ oder OH, und wobei *m* eine ganze Zahl ist, die ausgewählt ist aus 1-10, vorzugsweise 1-5, stärker bevorzugt *m* = 1; und

  ◦ ein erstes Lithiumsalz;

b. eine positive Elektrode, und
c. eine Elektrolytzusammensetzung, die Folgendes umfasst

i. eine organische nichtfluorierte Flüssigkeit, die ein zweites Lithiumsalz umfasst, und
ii.eine fluorierte Flüssigkeit,

wobei das Molverhältnis von dem zweiten Lithiumsalz zu der fluorierten Flüssigkeit zwischen 1:2 und 1:0,15 (mol/mol) beträgt.

**2.** Batterie nach Anspruch 1, wobei das Molverhältnis von dem zweiten Lithiumsalz zu der organischen nichtfluorierten Flüssigkeit zwischen 1:3 und 1:0,5 (mol/mol), vorzugsweise zwischen 1:2 und 1:0,60 (mol/mol), stärker bevorzugt zwischen 1:1,60 und 1:0,80 (mol/mol), am stärksten bevorzugt zwischen 1:1,50 und 1:10, beträgt.

**3.** Batterie nach Anspruch 1 oder 2, wobei das Molverhältnis von der organischen nichtfluorierten Flüssigkeit zu der fluorierten Flüssigkeit zwischen 1:2 und 1:0,10 (mol/mol), vorzugsweise zwischen 1:1,50 und 1:0,20 (mol/mol), stärker bevorzugt zwischen 1:1,20 und 1:0,25 (mol/mol), noch stärker bevorzugt zwischen 1:1 und 1:0,30 (mol/mol), am stärksten bevorzugt zwischen 1:0,85 und 1:0,30 (mol/mol), beträgt.

**4.** Batterie nach einem der Ansprüche 1-3, wobei die negative Elektrode eine leitfähige Schicht umfasst, die aus der Schutzschicht, wie in Anspruch 1 definiert, und einem Fluorpolymeradditiv besteht, und wobei das Fluorpolymeradditiv ausgewählt ist aus der Gruppe bestehend aus Polytetrafluorethylen (PTFE), Polyvinylidenfluorid (PVDF), einem Tetrafluorethylen-Perfluoralkylvinylether-Copolymer, Poly(vinylidenfluorid-co-hexafluorpropylen) (PVDF-HFP), einem Vinylidenfluorid-Chlortrifluorethylen-Copolymer, einem Ethylen-Tetrafluorethylen-Copolymer, einem Polychlortrifluorethylen, Vinylidenfluorid-Pentafluorpropylen-Copolymer, einem Propylen-Tetrafluorethylen-Copolymer, einem Ethylen-Chlortrifluorethylen-Copolymer, einem Vinylidenfluorid-Hexafluorpropylen-Tetrafluorethylen-Copolymer, einem Vinylidenfluorid-Perfluormethylvinylether-Tetrafluorethylen-Copolymer und einer Kombination davon, wobei das Fluorpolymeradditiv vorzugsweise Polyvinylidenfluorid oder Poly(vinylidenfluorid-co-hexafluorpropylen), am stärksten bevorzugt Poly(vinylidenfluorid-co-hexafluorpropylen), ist.

**5.** Batterie nach Anspruch 4, wobei das Gewichtsverhältnis von dem Copolymer zu dem Fluorpolymeradditiv zwischen 1:10 und 10:1 (w/w), vorzugsweise zwischen 1:5 und 8:1 (w/w), stärker bevorzugt zwischen 1:2 und 5:1 (w/w), noch stärker bevorzugt zwischen 1:2 und 4:1 (w/w), am stärksten bevorzugt zwischen 2:1 und 4:1 (w/w), beträgt.

**6.** Batterie nach einem der Ansprüche 1-5, wobei das erste Lithiumsalz ausgewählt ist aus der Gruppe bestehend aus $Li_2CO_3$, $Li_2O$, $Li_2C_2O_4$, LiOH, $LiX^7$, $R^{13}OCO_2Li$, HCOLi, $R^{13}OLi$, $Li_2O$, $Li_2C_2O_4$, $(ROCO_2Li)_2$, $(CH_2OCO_2Li)_2$, $Li_2S$, LiSCN, $LiN(CN)_2$, $LiClO_4$, $LiBF_4$, $LiAsF_6$, $LiPF_6$, $LiCF_3SO_3$, $LiC(CF_3SO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$ und einer Kombination davon, wobei $R^{13}$ = ein Kohlenwasserstoff und $X^7$ = F, Cl, I oder Br; vorzugsweise ausgewählt ist aus der Gruppe bestehend aus LiSCN, $LiN(CN)_2$, $LiClO_4$, LiI, $LiBF_4$, $LiAsF_6$, $LiCF_3SO_3$, $LiCF_3(SO_3)_2$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$ und einer Kombination davon; wobei das Lithiumsalz stärker bevorzugt $LiN(SO_2CF_3)_2$ oder $LiN(SO_2F)_2$ ist; wobei das Lithiumsalz am stärksten bevorzugt $LiN(SO_2F)_2$ ist.

**7.** Batterie nach einem der Ansprüche 1-6, wobei das erste Monomer repräsentiert ist durch die Formel (III)

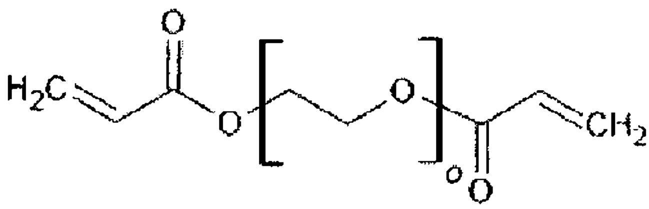

(III),

wobei o eine ganze Zahl ist, die ausgewählt ist aus 5-150, vorzugsweise 8-100, stärker bevorzugt 10-50.

**8.** Batterie nach einem der Ansprüche 1-7, wobei das zweite Monomer repräsentiert ist durch die Formel (IV)

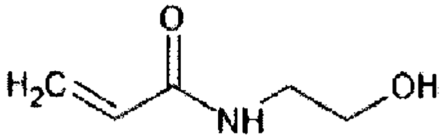

(IV).

9. Batterie nach einem der Ansprüche 1-8, wobei das Gewichtsverhältnis von dem ersten Monomer zu dem zweiten Monomer zwischen 1:20 und 20:1 (w/w), vorzugsweise zwischen 1:10 bis 14:1 (w/w), stärker bevorzugt zwischen 1:5 und 12:1 (w/w), noch stärker bevorzugt zwischen 1:3 und 10:1 (w/w), am stärksten bevorzugt zwischen 1:2 und 2:1 (w/w), beträgt.

10. Batterie nach einem der Ansprüche 1-9, wobei das Copolymer durch die Reaktion des ersten Monomers und des zweiten Monomers unter Verwendung eines Photoinitiators erhalten wird.

11. Batterie nach einem der Ansprüche 1-10, wobei das Copolymer einem Schritt des thermischen Temperns unterzogen wird.

12. Batterie nach einem der Ansprüche 1-11, wobei das zweite Lithiumsalz ausgewählt ist aus der Gruppe bestehend aus $Li_2CO_3$, $Li_2O$, $Li_2C_2O_4$, LiOH, $LiX^8$, $R^{14}OCO_2Li$, HCOLi, $R^{14}OLi$, $Li_2O$, $Li_2C_2O_4$, $(ROCO_2Li)_2$, $(CH_2OCO_2Li)_2$, $Li_2S$, LiSCN, $LiN(CN)_2$, $LiClO_4$, $LiBF_4$, $LiAsF_6$, $LiPF_6$, $LiCF_3SO_3$, $LiC(CF_3SO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$, wobei $R^{14}$ = ein Kohlenwasserstoff und $X^8$ = F, Cl, I oder Br; vorzugsweise LiSCN, $LiN(CN)_2$, $LiClO_4$, LiI, $LiBF_4$, $LiAsF_6$, $LiCF_3SO_3$, $LiCF_3(SO_3)_2$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$ und einer Kombination davon; wobei das Lithiumsalz stärker bevorzugt $LiN(SO_2CF_3)_2$ oder $LiN(SO_2F)_2$ ist; wobei das Lithiumsalz am stärksten bevorzugt $LiN(SO_2F)_2$ ist.

13. Batterie nach einem der Ansprüche 1-12, wobei die organische nicht fluorierte Flüssigkeit ausgewählt ist aus der Gruppe bestehend aus *N*-Methyl-2-pyrrolidon, Propylencarbonat, Ethylencarbonat, Butylencarbonat, Dimethylcarbonat, Diethylcarbonat, Ethylmethylcarbonat, γ-Butyrolacton, 1,2-Dimethoxyethan, 1,2-Diethoxyethan, Tetrahydrofan-2-methyltetrahydrofuran, Dimethylsulfoxid, 1,3-Dioxolan, 4-Methyl-1,3-dioxen, Diethylether, Allylether, Diethylenglyoldimethylether (Diglyme), Triethylenglycoldimethylether (Triglyme), Tetraethylenglycoldiemethylether (Tetraglyme), Butyldiglyme, Polyethylenglycol, Formamid, Dimethylformamid, Dioxolan, Acetonitril, Nitromethan, Methylformiat, Methylacetat, Triesterphosphat, Trimethoxymethan, Sulfolan, Methylsulfolan, 1,3-Dimethyl-2-imidazolidon, Methylpropionat, Ethylpropionat, 1,4-Dioxan, Trimethylphosphat (TMPa), Triethylphosphat (TEPa), Dimethylmethylphosphonat (DMMP), Hexamethyldisiloxan, Hexamethylcyclotrisiloxan und einer Kombination davon; wobei die organische nichtfluorierte Flüssigkeit vorzugsweise ausgewählt ist aus der Gruppe bestehend aus 1,3-Dioxolan, 1,4-Dioxan, Tetrahydrofuran, Allylether, Diethylenglycoldimethylether, Triethylenglycoldimethylether, Tetraethylenglycoldimethylether, Butyldiglyme, Dimethylether, Diethylether, Polyethylenglycol, Acetonitril, Dimethylsulfoxid, Sulfolan, Trimethylphosphat, Triethylphosphat, Dimethylmethylphosphonat, Hexamethyldisiloxan, Hexamethylcyclotrisiloxan, 1,2-Dimethoxyethan oder 1,2-Diethoxyethan; wobei die nichtfluorierte organische Flüssigkeit am stärksten bevorzugt 1,2-Dimethoxyethan ist.

14. Batterie nach einem der Ansprüche 1-13, wobei die fluorierte Flüssigkeit ausgewählt ist aus der Gruppe bestehend aus 1,1,2,2-Tetrafluorethyl-2,2,3,3-Tetrafluorpropylether (TTE), Bis(2,2,2-Trifluorethyl)ether (BTFE), 1,1,2,2-Tetrafluorethyl-2,2,2-Trifluorethylether (TFTFE), Tris(2,2,2-Trifluorethyl)orthoformiat (TFEO), Methoxynonafluorbutan (MOFB), Ethoxynonafluorbutan (EOFB), Di(2,2,2-Trifluorethyl)carbonat (DTFEC), Tris(2,2,2-Trifluorethyl)orthoformiat (TFEO), Tris(hexafluorisopropyl)orthoformiat (THFiPO), Tris(2,2-Difluorethyl)orthoformiat (TDFEO), Bis(2,2,2-Trifluorethyl)methylorthoformiat (BTFEMO), Tris(2,2,3,3,3-Pentafluorpropyl)orthoformiat (TPFPO), Tris(2,2,3,3-Tetrafluorpropyl)orthoformiat (TTPO) und einer Kombination davon; wobei die fluorierte Flüssigkeit vorzugsweise 1,1,2,2-Tetrafluorethyl-2,2,3,3-Tetrafluoropropylether (TTE), Bis(2,2,2-Trifluorethyl)ether (BTFE) oder 1,1,2,2-Tetrafluorethyl-2,2,2-Trifluorethylether (TFTFE); am stärksten bevorzugt 1,1,2,2-Tetrafluorethyl-2,2,3,3-Tetrafluorpropylether (TTE).

15. Batterie nach einem der Ansprüche 1-14, wobei die positive Elektrode ein Positivelektrodenmaterial umfasst, das

ausgewählt ist aus der Gruppe bestehend aus Lithium-Nickel-Mangan-Cobalt-Oxid, Lithium-Nickel-Mangan-Oxid, Lithium-Nickel-Cobalt-Aluminium-Oxid, Lithium-Cobalt-Oxid, Lithium-Eisen-Phosphat, Lithium-Eisen-Mangan-Phosphat, Lithium-Eisen-Cobalt-Phosphat, Lithium-Sulfid, Schwefel und Aluminium; wobei das Positivelektrodenmaterial vorzugsweise Lithium-Nickel-Mangan-Cobalt-Oxid oder Lithium-Nickel-Cobalt-Aluminium-Oxid ist.

## Revendications

**1.** Batterie comprenant

a. une électrode négative comprenant

- un substrat métallique, et
- une couche protectrice disposée directement sur au moins une partie du substrat métallique, dans laquelle la couche protectrice comprend

◦ un copolymère pouvant être obtenu par la réaction entre :

- un premier monomère représenté par la formule (I)

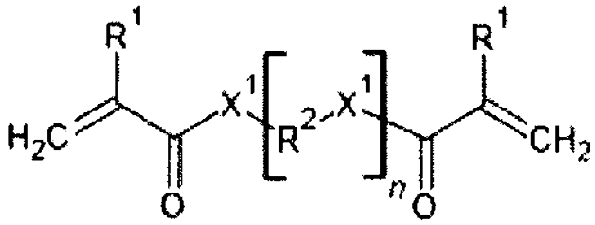

(I),

où $R^1$ = H ou $CH_3$ ; $R^2$ est un alcanediyle en $C_{2-6}$, l'alcanediyle étant éventuellement substitué par un ou plusieurs substituants choisis parmi halogénure, alkyle en $C_{1-4}$, $CF_3$ ou $OR^3$, $R^3$ étant choisi parmi hydrogène un alkyle en $C_{1-4}$ ; $X^1$ = NH ou O ; et *n* est un nombre entier choisi parmi 5 à 150, de préférence 8 à 100, de manière davantage préférée 10 à 50 ; et
- un deuxième monomère représenté par la formule (II)

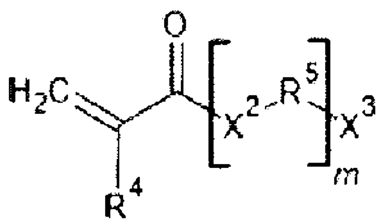

(II),

où $R^4$ = H ou $CH_3$ ; $R^5$ est un alcanediyle en $C_{2-6}$, l'alcanediyle étant éventuellement substitué par un ou plusieurs substituants choisis parmi halogénure, alkyle en $C_{1-4}$, $CF_3$ ou $OR^6$, $R^6$ étant choisi parmi hydrogène ou alkyle en $C_{1-4}$ ; $X^2$ = NH ou O ; $X^3$ = SH, $NH_2$ ou OH et *m* est un nombre entier choisi parmi 1 à 10, de préférence 1 à 5, de manière davantage préférée *m* = 1 ; et

◦ un premier sel de lithium ;

b. une électrode positive, et
c. une composition électrolytique comprenant

i. un liquide non fluoré organique comprenant un deuxième sel de lithium, et
ii.un liquide fluoré,

le rapport molaire entre le deuxième sel de lithium et le liquide fluoré étant compris entre 1:2 et 1:0,15 (mol/mol).

**2.** Batterie selon la revendication 1, dans laquelle le rapport molaire entre le deuxième sel de lithium et le liquide non fluoré organique est compris entre 1:3 et 1:0,5 (mol/mol), de préférence entre 1:2 et 1:0,60 (mol/mol), de manière davantage préférée entre 1:1,60 et 1:0,80 (mol/mol), de manière préférée entre toutes entre 1:1,50 et 1:10.

**3.** Batterie selon la revendication 1 ou 2, dans laquelle le rapport molaire entre le liquide non fluoré organique et le liquide fluoré est compris entre 1:2 et 1:0,10 (mol/mol), de préférence entre 1:1,50 et 1:0,20 (mol/mol), de manière davantage préférée entre 1:1,20 et 1:0,25 (mol/mol), de manière encore plus préférée entre 1:1 et 1:0,30 (mol/mol), de manière préférée entre toutes entre 1:0,85 et 1:0,30 (mol/mol).

**4.** Batterie selon l'une quelconque des revendications 1 à 3, dans laquelle l'électrode négative comprend une couche conductrice constituée de la couche protectrice telle que définie dans la revendication 1 et d'un additif fluoropolymère et l'additif fluoropolymère étant choisi dans le groupe constitué par le polytétrafluoroéthylène (PTFE), le polyfluorure de vinylidène (PVDF), un copolymère de tétrafluoroéthylène-perfluoro alkylvinyl éther, le poly(fluorure de vinylidène-co-hexafluoropropylène) (PVDF-HFP), un copolymère de fluorure de vinylidène-chlorotrifluoroéthylène, un copolymère d'éthylène-tétrafluoroéthylène, un polychlorotrifluoroéthylène, un copolymère de fluorure de vinylidène-pentafluoropropylène, un copolymère de propylènetétrafluoroéthylène, un copolymère d'éthylènechlorotrifluoroéthylène, un copolymère de fluorure de vinylidène-hexafluoropropylène-tétrafluoroéthylène, un copolymère de fluorure de vinylidène-perfluorométhylvinyl éther-tétrafluoroéthylène et une combinaison de ceux-ci, de préférence, l'additif fluoropolymère étant le polyfluorure de vinylidène ou le poly(fluorure de vinylidène-co-hexafluoropropylène), de manière préférée entre toutes le poly(fluorure de vinylidène-co-hexafluoropropylène).

**5.** Batterie selon la revendication 4, dans laquelle le rapport pondéral entre le copolymère et l'additif fluoropolymère est compris entre 1:10 et 10:1 (p/p), de préférence entre 1:5 et 8:1 (p/p), de manière davantage préférée entre 1:2 et 5:1 (p/p), de manière encore plus préférée entre 1:2 et 4:1 (p/p), de manière préférée entre toutes entre 2:1 et 4:1 (p/p).

**6.** Batterie selon l'une quelconque des revendications 1 à 5, dans laquelle le premier sel de lithium est choisi dans le groupe constitué par $Li_2CO_3$, $Li_2O$, $Li_2C_2O_4$, LiOH, $LiX^7$, $R^{13}OCO_2Li$, HCOLi, $R^{13}OLi$, $Li_2O$, $Li_2C_2O_4$, $(ROCO_2Li)_2$, $(CH_2OCO_2Li)_2$, $Li_2S$, LiSCN, $LiN(CN)_2$, $LiClO_4$, $LiBF_4$, $LiAsF_6$, $LiPF_6$, $LiCF_3SO_3$, $LiC(CF_3SO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$ et une combinaison de ceux-ci, $R^{13}$ = un hydrocarbure et $X^7$ = F, Cl, I ou Br ; de préférence choisi dans le groupe constitué par LiSCN, $LiN(CN)_2$, $LiClO_4$, LiI, $LiBF_4$, $LiAsF_6$, $LiCF_3SO_3$, $LiCF_3(SO_3)_2$, $LiN(S_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$ et une combinaison de ceux-ci ; de manière davantage préférée le sel de lithium est $LiN(SO_2CF_3)_2$ ou $LiN(SO_2F)_2$ ; de manière préférée entre toutes le sel de lithium est $LiN(SO_4F)_2$.

**7.** Batterie selon l'une quelconque des revendications 1 à 6, dans laquelle le premier monomère est représenté par la formule (III)

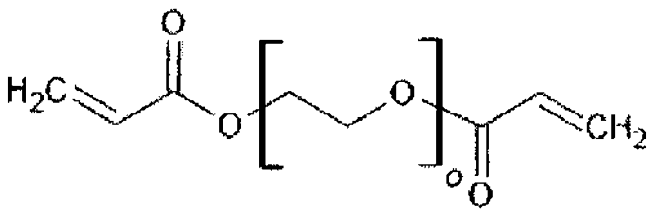

(III),

où o est un nombre entier choisi parmi 5 à 150, de préférence 8 à 100, de manière davantage préférée 10 à 50.

**8.** Batterie selon l'une quelconque des revendications 1 à 7, dans laquelle le deuxième monomère est représenté par la formule (IV)

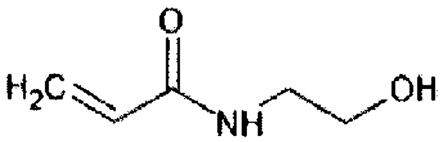

(IV).

9. Batterie selon l'une quelconque des revendications 1 à 8, dans laquelle le rapport pondéral entre le premier monomère et le deuxième monomère est compris entre 1:20 et 20:1 (p/p), de préférence entre 1:10 et 14:1 (p/p), de manière davantage préférée entre 1:5 et 12:1 (p/p), de manière encore plus préférée entre 1:3 et 10:1 (p/p), de manière préférée entre toutes entre 1:2 et 2:1 (p/p).

10. Batterie selon l'une quelconque des revendications 1 à 9, dans laquelle le copolymère est obtenu par la réaction du premier monomère et du deuxième monomère par l'utilisation d'un photo-initiateur.

11. Batterie selon l'une quelconque des revendications 1 à 10, dans laquelle le copolymère est soumis à une étape de recuit thermique.

12. Batterie selon l'une quelconque des revendications 1 à 11, dans laquelle le deuxième sel de lithium est choisi dans le groupe constitué par $Li_2CO_3$, $Li_2O$, $Li_2C_2O_4$, LiOH, $LiX^8$, $R^{14}OCO_2Li$, HCOLi, $R^{14}OLi$, $Li_2O$, $Li_2C_2O_4$, $(ROCO_2Li)_2$, $(CH_2OCO_2Li)_2$, $Li_2S$, LiSCN, $LiN(CN)_2$, $LiClO_4$, $LiBF_4$, $LiAsF_6$, $LiPF_6$, $LiCF_3SO_3$, $LiC(CF_3SO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$, $R^{14}$ = un hydrocarbure et $X^8$ = F, Cl, I ou Br ; de préférence LiSCN, $LiN(CN)_2$, $LiClO_4$, LiI, $LiBF_4$, $LiAsF_6$, $LiCF_3SO_3$, $LiCF_3(SO_3)_2$, $LiN(S_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$ et une combinaison de ceux-ci ; de manière davantage préférée le sel de lithium est $LiN(SO_2CF_3)_2$ ou $LiN(SO_2F)_2$ ; de manière préférée entre toutes le sel de lithium est $LiN(SO_2F)_2$.

13. Batterie selon l'une quelconque des revendications 1 à 12, dans laquelle le liquide non fluoré organique est choisi dans le groupe constitué par *N*-méthyl-2-pyrrolidone, carbonate de propylène, carbonate d'éthylène, carbonate de butylène, carbonate de diméthyle, carbonate de diéthyle, carbonate d'éthylméthyle, γbutyrolactone, 1,2-diméthoxy éthane, 1,2-diéthoxy éthane, tétrahydrofurane, 2-méthyl tétrahydrofurane, diméthylsulfoxyde, 1,3-dioxolane, 4-méthyl-1,3-dioxène, éther diéthylique, éther allylique, diméthyl éther de diéthylène glycol (diglyme), diméthyl éther de triéthylène glycol (triglyme), éther diméthylique de tétraéthylène glycol (tétraglyme), diglyme de butyle, polyéthylène glycol, formamide, diméthyl formamide, dioxolane, acétonitrile, nitrométhane, formiate de méthyle, acétate de méthyle, phosphate de triester, tirméthoxyméthane, sulfolane, méthyl sulfolane, 1,3-diméthyl-2-imidazolidone, propionate de méthyle, propionate d'éthyle, 1,4-dioxane, phosphate de triméthyle (TMPa), phosphate de triéthyle (TEPa), phosphonate de diméthylméthyle (DMMP), hexaméthyldisiloxane, hexaméthylcyclotrisiloxane, et une combinaison de ceux-ci ; de préférence, le liquide non fluoré organique est choisi dans le groupe constitué par 1,3-dioxolane, 1,4-dioxane, tétrahydrofurane, éther allylique, éther diméthylique de diéthylène glycol , éther diméthylique de triéthylène glycol, éther diméthylique de tétraéthylène glycol, diglyme de butyle, éther diméthylique, éther diéthylique, polyéthylène glycol, acétonitrile, diméthylsulfoxyde, sulfolane, phosphate de triméthyle, phosphate de triéthyle, phosphonate de diméthylméthyle, hexaméthyldisiloxane, hexaméthylcyclotrisiloxane, 1,2-diméthoxy éthane ou 1,2-diéthoxy éthane ; de manière préférée entre toutes, le liquide organique non fluoré est 1,2-diméthoxy éthane.

14. Batterie selon l'une quelconque des revendications 1 à 13, dans laquelle le liquide fluoré est choisi dans le groupe constitué par 1,1,2,2-tétrafluoroéthyl-2,2,3,3-tétrafluoropropyl éther (TTE), bis(2,2,2-trifluoroéthyl) éther (BTFE), 1,1,2,2-tétrafluoroéthyl-2,2,2-trifluoroéthyléther (TFTFE), orthoformiate de tris(2,2,2-trifluoroéthyle) (TFEO), méthoxynonafluorobutane (MOFB), éthoxynonafluorobutane (EOFB), carbonate de di(2,2,2-trifluoroéthyle) (DTFEC), orthoformiate de tris(2,2,2-trifluoroéthyle) (TFEO), orthoformiate de tris(hexafluoroisopropyle) (THFiPO), orthoformiate de tris(2,2-difluoroéthyle) (TDFEO), orthoformiate de bis(2,2,2-trifluoroéthyl)méthyle (BTFEMO), orthoformiate de tris(2,2,3,3,3-pentafluoropropyle) (TPFPO), orthoformiate de tris(2,2,3,3-tétrafluoropropyle) (TTPO) et une combinaison de ceux-ci ; de préférence le liquide fluoré est 1,1,2,2-tétrafluoroéthyl-2,2,3,3-tétrafluoropropyléther (TTE), bis(2,2,2-trifluoroéthyl) éther (BTFE) ou 1,1,2,2-tétrafluoroéthyl-2,2,2-trifluoroéthyl éther (TFTFE) ; de manière préférée entre toutes 1,1,2,2-tétrafluoroéthyl-2,2,3,3-tétrafluoropropyl éther (TTE).

**15.** Batterie selon l'une quelconque des revendications 1 à 14, dans laquelle l'électrode positive comprend un matériau d'électrode positive choisi dans le groupe constitué par oxyde de lithium nickel-manganèse-cobalt, oxyde de lithium nickel-manganèse, oxyde de lithium nickel-cobalt-aluminium, oxyde lithium cobalt, phosphate de lithium fer, phosphate de lithium fer manganèse, phosphate lithium fer cobalt, sulfure de lithium, soufre et aluminium ; de préférence, le matériau d'électrode positive est l'oxyde de lithium nickel-manganèse-cobalt ou l'oxyde de lithium nickel-cobalt-aluminium.

Fig. 1

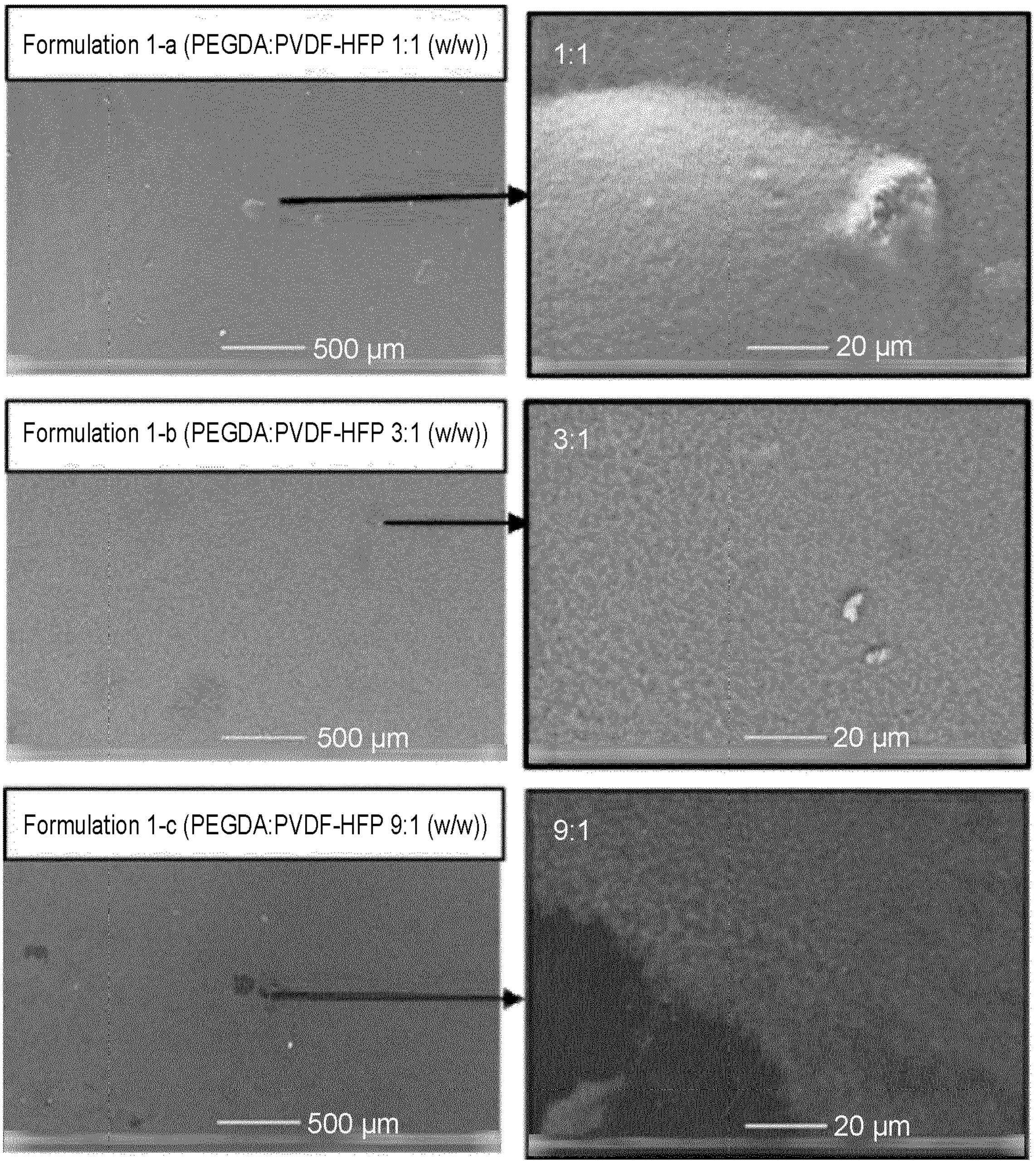
Formulation 1-a (PEGDA:PVDF-HFP 1:1 (w/w))
500 µm
1:1
20 µm
Formulation 1-b (PEGDA:PVDF-HFP 3:1 (w/w))
500 µm
3:1
20 µm
Formulation 1-c (PEGDA:PVDF-HFP 9:1 (w/w))
500 µm
9:1
20 µm

# Fig. 2

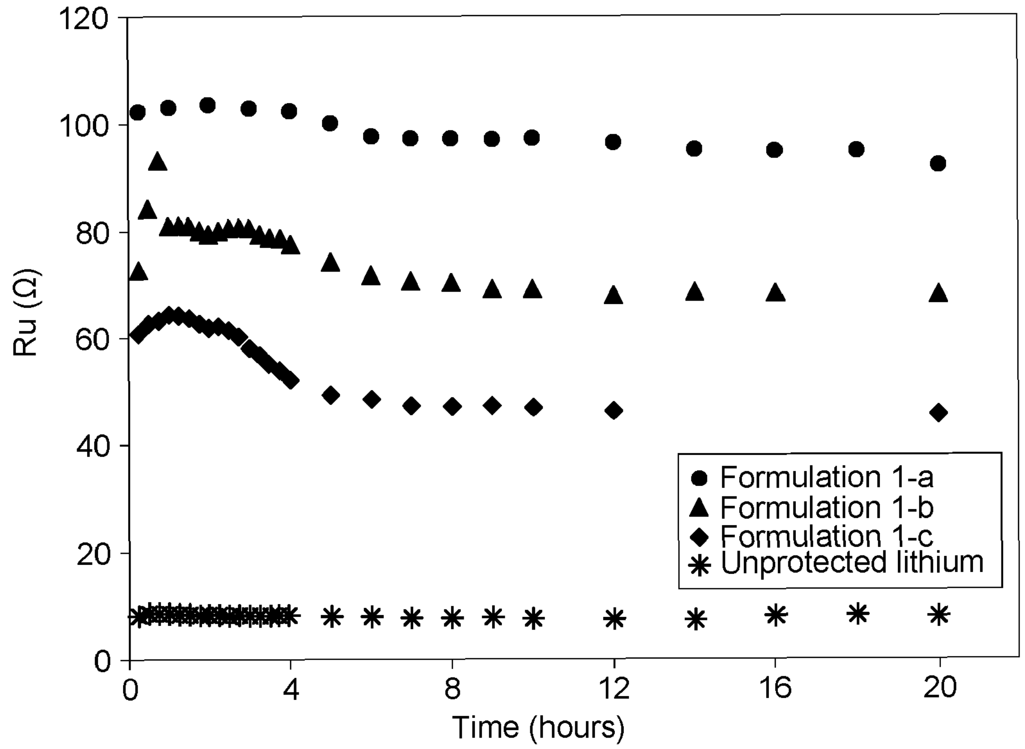

120
100
80
60
40
20
0
Ru (Ω)
0
4
8
12
16
20
Time (hours)
Formulation 1-a
Formulation 1-b
Formulation 1-c
Unprotected lithium


# Fig. 3

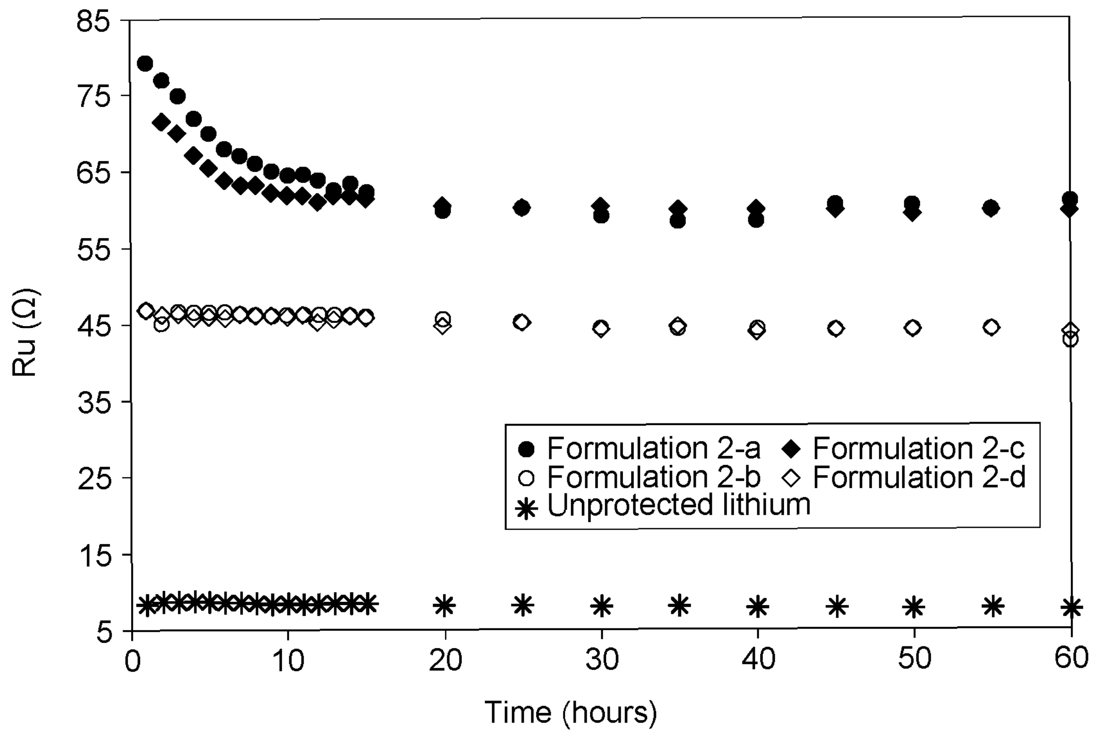

85
75
65
55
45
35
25
15
5
Ru (Ω)
0
10
20
30
40
50
60
Time (hours)
Formulation 2-a
Formulation 2-c
Formulation 2-b
Formulation 2-d
Unprotected lithium

Fig. 4

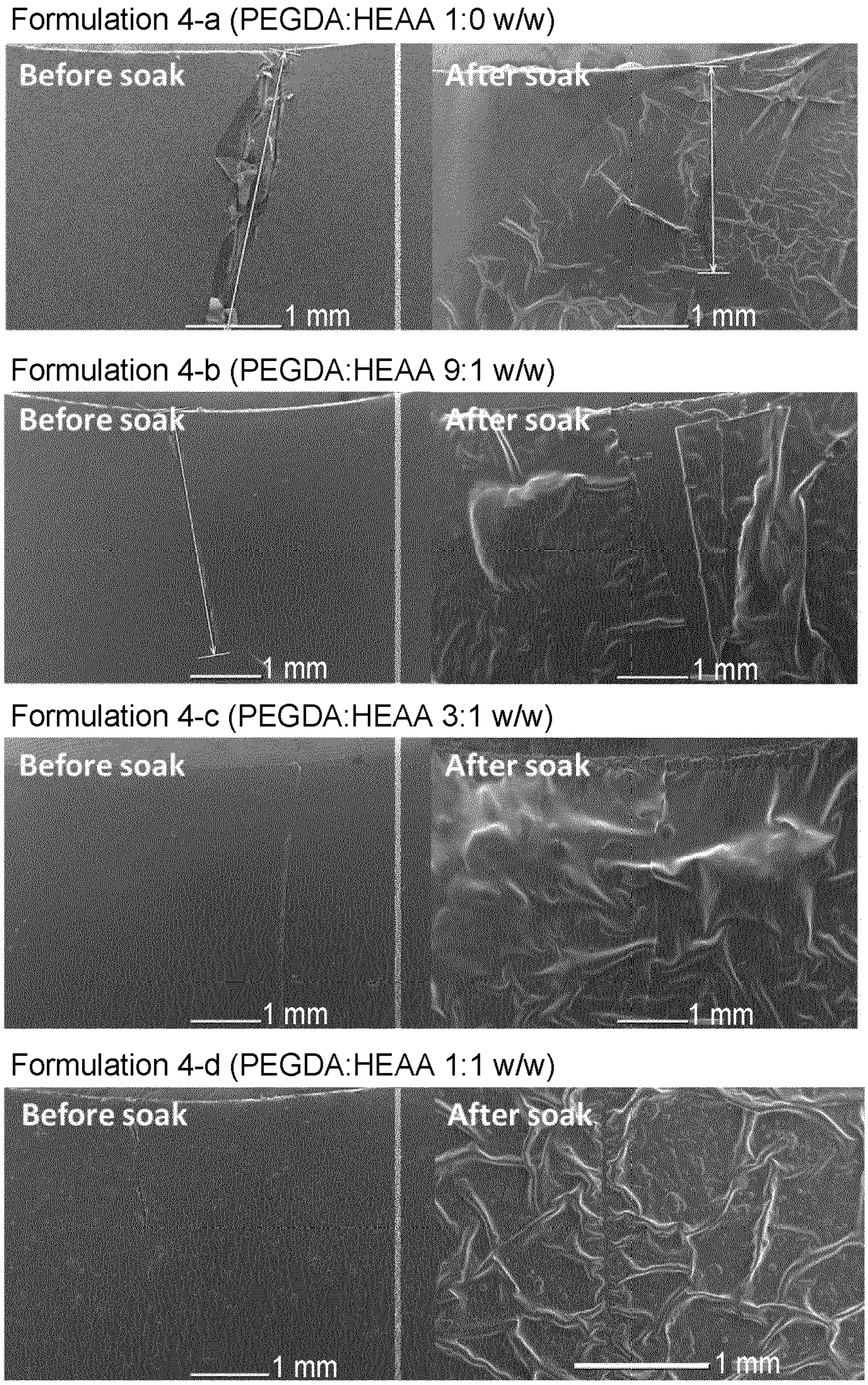
Formulation 4-a (PEGDA:HEAA 1:0 w/w)
Before soak
1 mm
After soak
1 mm
Formulation 4-b (PEGDA:HEAA 9:1 w/w)
Before soak
1 mm
After soak
1 mm
Formulation 4-c (PEGDA:HEAA 3:1 w/w)
Before soak
1 mm
After soak
1 mm
Formulation 4-d (PEGDA:HEAA 1:1 w/w)
Before soak
1 mm
After soak
1 mm

Fig. 5

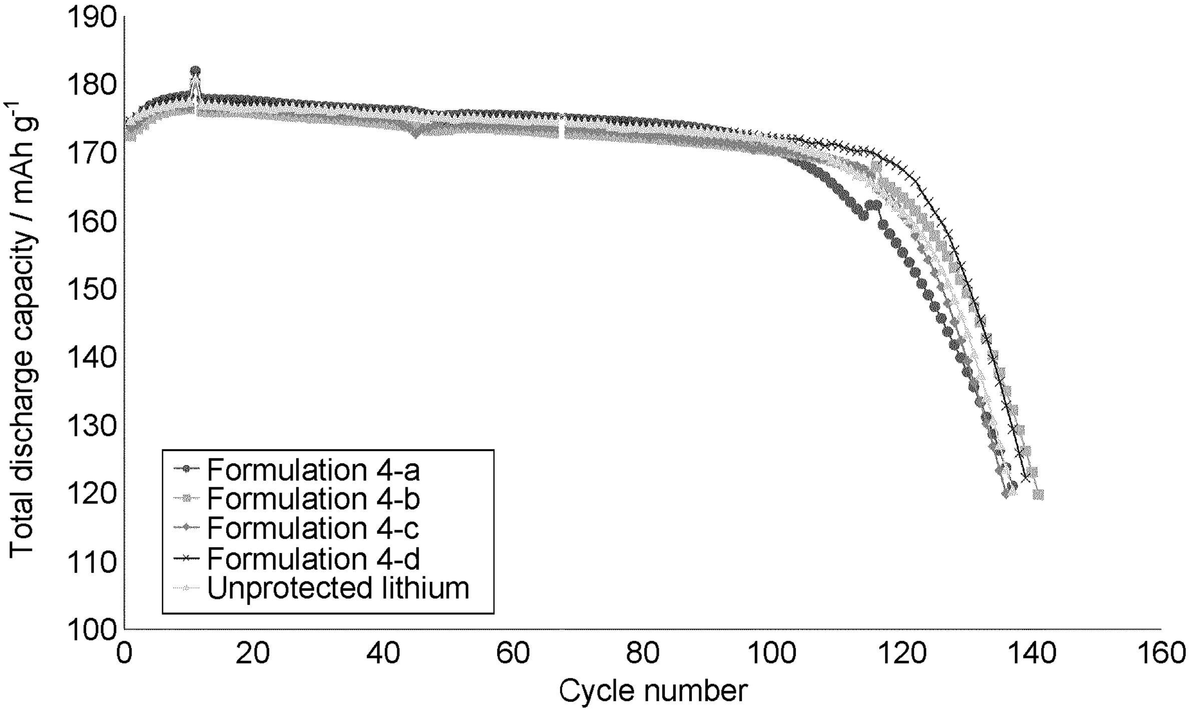
Total discharge capacity / mAh g-1
190
180
170
160
150
140
130
120
110
100
0
20
40
60
80
100
120
140
160
Cycle number
Formulation 4-a
Formulation 4-b
Formulation 4-c
Formulation 4-d
Unprotected lithium

Fig. 6

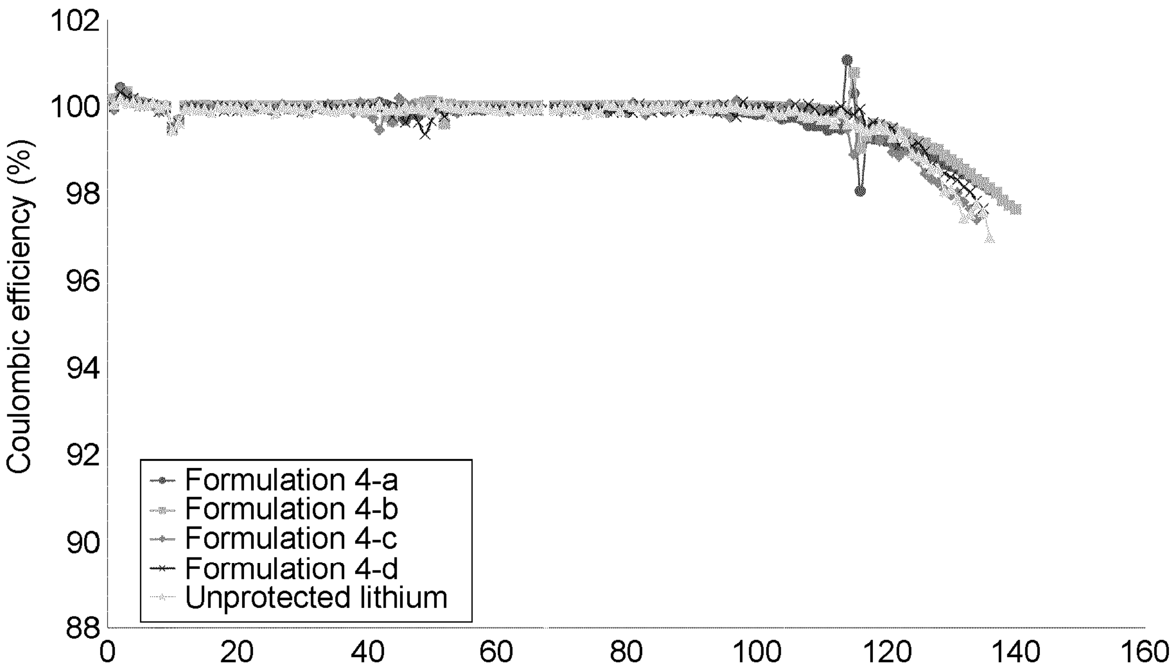
Coulombic efficiency (%)
102
100
98
96
94
92
90
88
0
20
40
60
80
100
120
140
160
Formulation 4-a
Formulation 4-b
Formulation 4-c
Formulation 4-d
Unprotected lithium

Fig. 7A

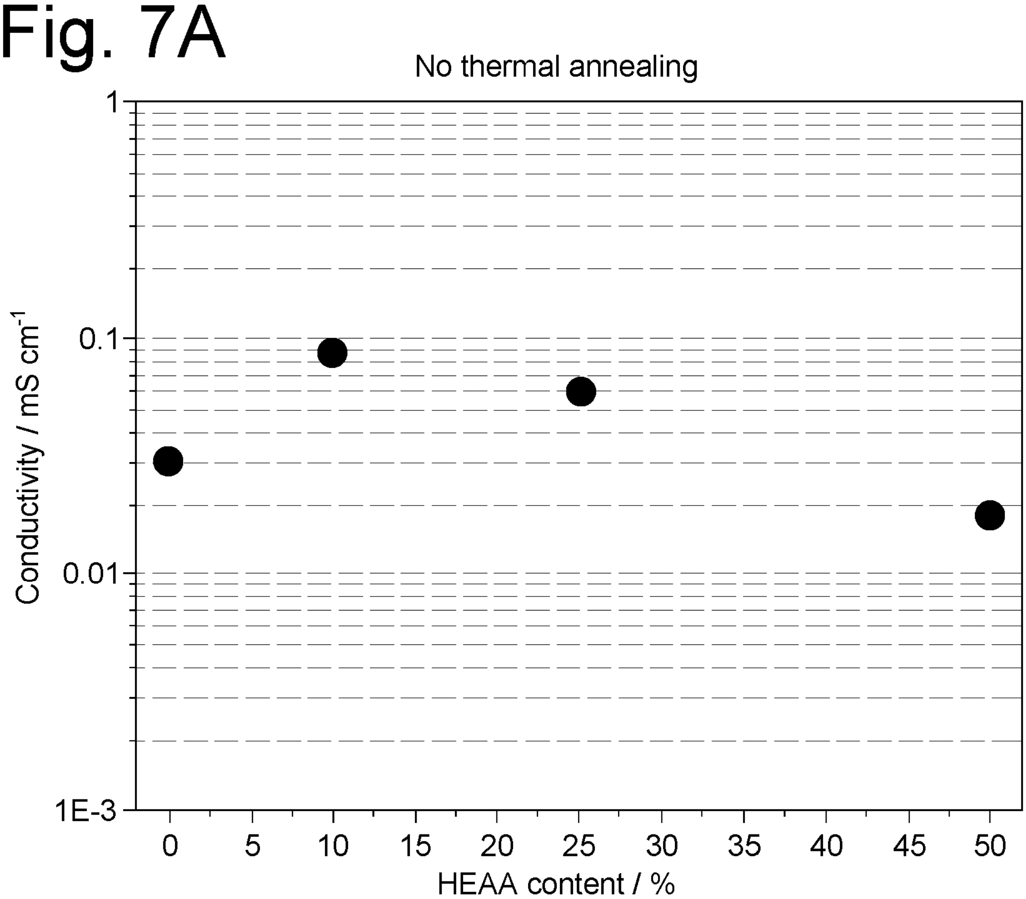
No thermal annealing
Conductivity / mS cm$^{-1}$
1
0.1
0.01
1E-3
0
5
10
15
20
25
30
35
40
45
50
HEAA content / %

Fig. 7B

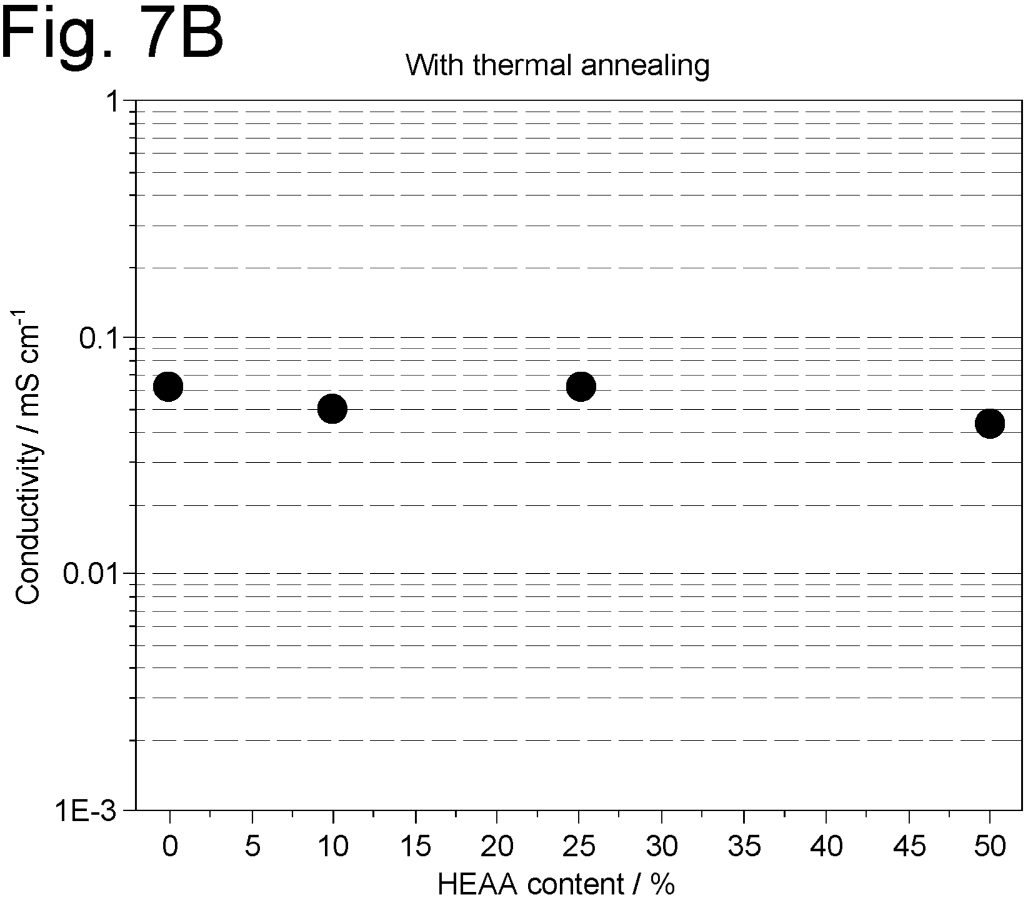
With thermal annealing
Conductivity / mS cm$^{-1}$
1
0.1
0.01
1E-3
0
5
10
15
20
25
30
35
40
45
50
HEAA content / %

Fig. 8

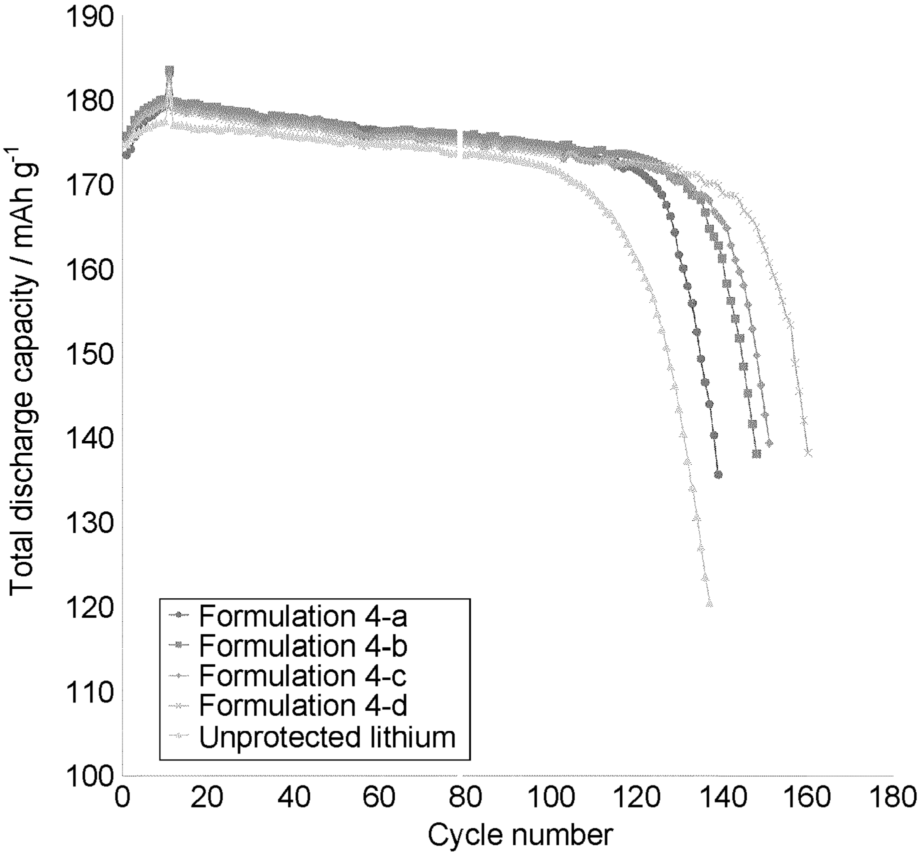
Total discharge capacity / mAh g-1
190
180
170
160
150
140
130
120
110
100
0
20
40
60
80
100
120
140
160
180
Cycle number
Formulation 4-a
Formulation 4-b
Formulation 4-c
Formulation 4-d
Unprotected lithium

Fig. 9

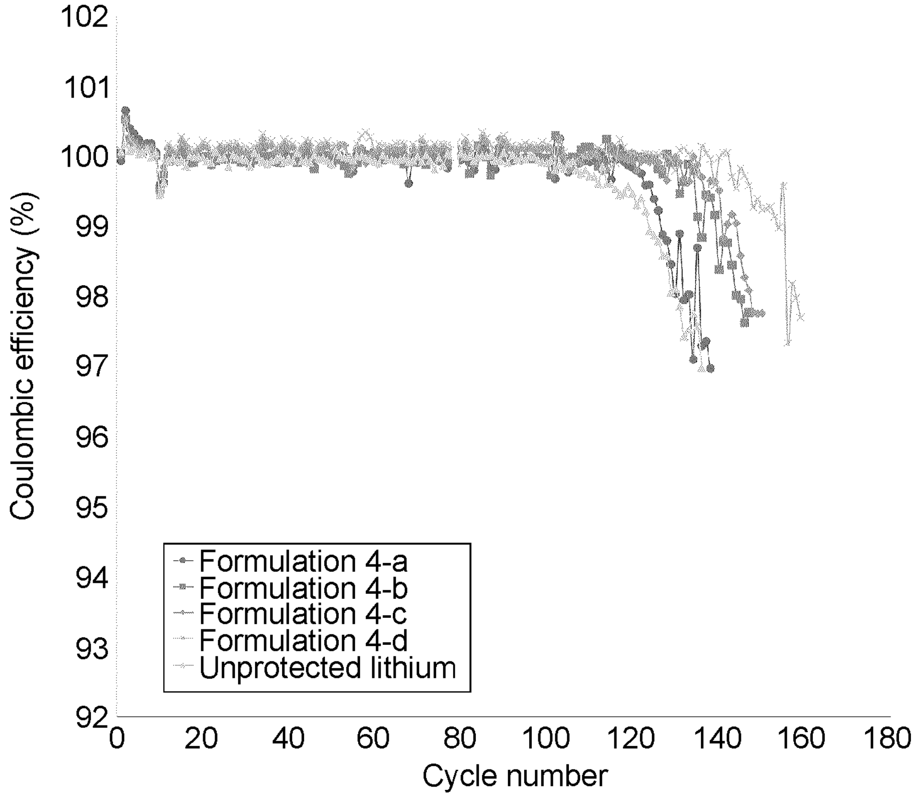
Coulombic efficiency (%)
102
101
100
99
98
97
96
95
94
93
92
0
20
40
60
80
100
120
140
160
180
Cycle number
Formulation 4-a
Formulation 4-b
Formulation 4-c
Formulation 4-d
Unprotected lithium

# Fig. 10

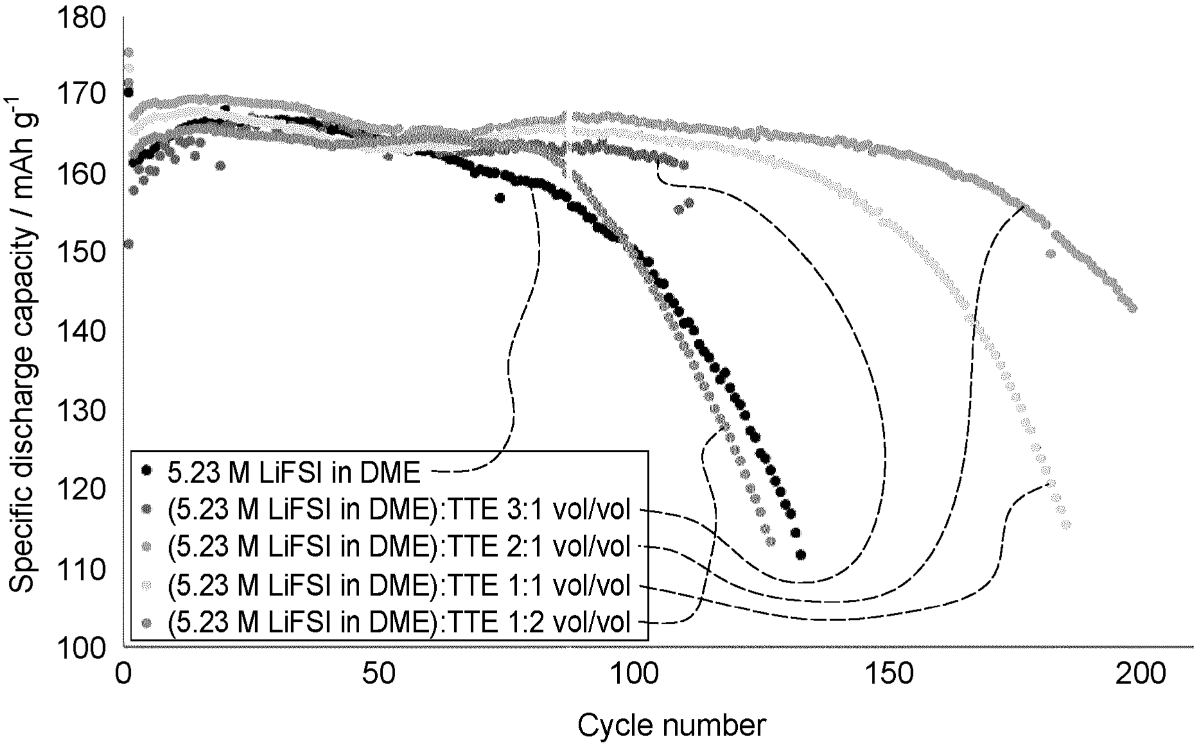
180
170
160
150
140
130
120
110
100
Specific discharge capacity / mAh g-1
0
50
100
150
200
Cycle number
5.23 M LiFSI in DME
(5.23 M LiFSI in DME):TTE 3:1 vol/vol
(5.23 M LiFSI in DME):TTE 2:1 vol/vol
(5.23 M LiFSI in DME):TTE 1:1 vol/vol
(5.23 M LiFSI in DME):TTE 1:2 vol/vol

Fig. 11A

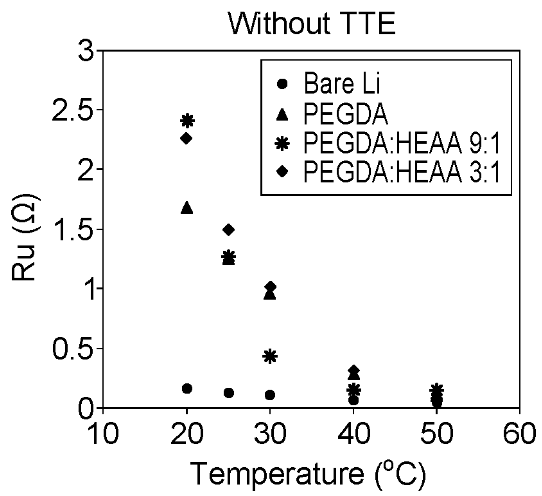


Fig. 11B

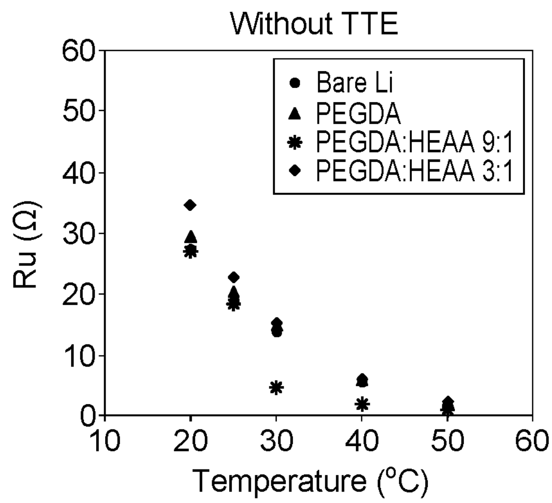


Fig. 11C

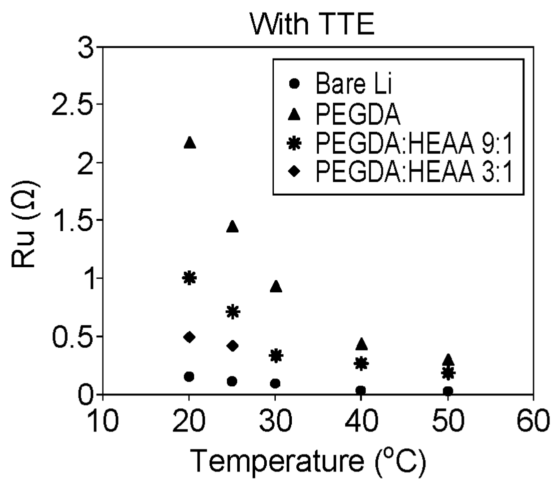


Fig. 11D

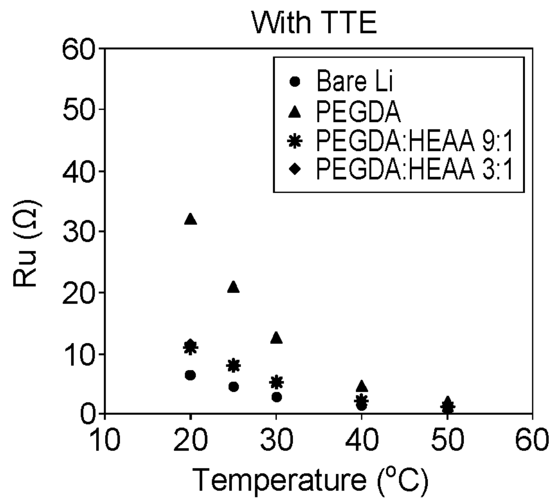

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20030042288 A
- US 20160372743 A1
- US 6902848 B1


### Non-patent literature cited in the description


- **I. GADWAL**. *Macromol*, 2021, vol. 1, 18-36
- **S. LIN et al.** *ACS Appl. Mater. Interfaces*, 2020, vol. 12 (30), 33710-33718